# EUROPEAN PATENT APPLICATION

(11) **EP 3 796 705 A1**
(43) Date of publication of application: **24.03.2021**
(21) Application number: 19831245.6
(22) Date of filing: 27.06.2019
(51) Int. Cl.: H04W 28/02

(54) **OVERLOAD CONTROL METHOD AND DEVICE**

(30) Priority: 03.07.2018 CN 201810717591
(71) Applicant: Huawei Technologies Co., Ltd., Longgang District Shenzhen, Guangdong 518129 (CN)
(72) Inventor: YING, Jiangwei, Shenzhen, Guangdong 518129 (CN); YANG, Yanmei, Shenzhen, Guangdong 518129 (CN); WANG, Yan, Shenzhen, Guangdong 518129 (CN)
(74) Representative: Pfenning, Meinig & Partner mbB
(86) International application number: PCT/CN2019/093411
(87) International publication number: WO 2020/007232

(57) **Abstract**

Embodiments of this application disclose an overload control method and apparatus, and relate to the field of communications technologies, to help relieve overload of an access and mobility management network element (for example, an AMF network element). The method may include: An access network device receives indication information from an access and mobility management network element. The indication information is used to indicate that the access and mobility management network element is overloaded. When a terminal is in an RRC connected mode or an RRC inactive mode, the access network device triggers, based on the indication information and characteristic information of the terminal, setting the terminal to be in an RRC idle mode; or when a terminal is in an RRC connected mode, the access network device triggers, based on the indication information and characteristic information of the terminal, setting the terminal to be in an RRC inactive mode.

## Description

This application claims priority to Chinese Patent Application No. 201810717591.2, filed with the China National Intellectual Property Administration on July 3, 2018 and entitled "OVERLOAD CONTROL METHOD AND APPARATUS", which is incorporated herein by reference in its entirety.

### TECHNICAL FIELD

Embodiments of this application relate to the field of communications technologies, and in particular, to an overload control method and apparatus.

### BACKGROUND

In a 5th generation (5rd generation, 5G) network architecture, an access and mobility management function (access and mobility management function, AMF) network element may be overloaded (overload) due to a cause such as a relatively large quantity of sent or received signaling. When the AMF network element is overloaded, overall network performance is relatively poor. Therefore, an effective overload control method needs to be provided.

### SUMMARY

Embodiments of this application provide an overload control method and apparatus, to help relieve overload of an access and mobility management network element (for example, an AMF network element).

According to a first aspect, an embodiment of this application provides an overload control method, including: An access network device receives indication information from an access and mobility management network element. The indication information is used to indicate that the access and mobility management network element is overloaded. When a first terminal is in a radio resource control (radio resource control, RRC) connected mode or an RRC inactive mode, the access network device triggers, based on the indication information and characteristic information of the first terminal, setting the first terminal to be in an RRC idle mode; or when a first terminal is in an RRC connected mode, the access network device triggers, based on the indication information and characteristic information of the first terminal, setting the first terminal to be in an RRC inactive mode. It can be learned that this embodiment of this application provides a technical solution for setting an RRC mode of a terminal based on characteristic information of the terminal when an access and mobility management network element is overloaded. When the terminal is in different RRC modes, the access and mobility management network element has different signaling processing load. Therefore, setting the RRC mode of the terminal with reference to the characteristic information of the terminal helps relieve overload of the access and mobility management network element. For example, when the terminal is in the RRC inactive mode, a radio access network notification area (RAN notification area, RNA) update (mobility RAN notification area update) may be triggered. In addition, compared with a terminal of a low-speed moving type, a terminal of a high-speed moving type may trigger an RNA update more frequently, resulting in heavier signaling processing load of the access and mobility management network element. Therefore, properly setting the RRC mode of the terminal with reference to the characteristic information of the terminal can relieve overload of the access and mobility management network element.

For example, the access and mobility management network element may be an AMF network element in a 5G network architecture, and the access network device may be an access network (access network, AN) device in the 5G network architecture or a radio access network (radio access network, RAN) device in the 5G network architecture.

For example, the indication information may be an overload start (overload start) message. Certainly, this application is not limited thereto.

For example, triggering setting the terminal to be in the RRC idle mode may be triggering a procedure of setting the terminal to be in the RRC idle mode. For example, the procedure may be an access network release (AN release) procedure. The terminal includes the first terminal.

For example, triggering setting the terminal to be in the RRC inactive mode may be triggering a procedure of setting the terminal to be in the RRC inactive mode. For example, the procedure may be an RRC connection release procedure. The terminal includes the first terminal.

In a possible design, the characteristic information of the terminal may include at least one of the following: a moving rate of the terminal, frequency with which the terminal receives/sends data, frequency with which the terminal switches between the RRC connected mode and the RRC inactive mode, frequency with which the terminal is handed over between cells, frequency with which the terminal initiates an RNA update, a moving track of the terminal, a moving range of the terminal, or the like. The terminal includes the first terminal. It may be understood that each of these characteristics may directly or indirectly reflect (or affect) RNA update frequency of the terminal and/or restoration frequency of an N3 data channel between the access network device and a user plane function (user plane function, UPF) network element, thereby affecting signaling processing load of the access and mobility management network element. For a specific analysis process, refer to the following part of specific implementations.

In a possible design, that the access network device triggers, based on the indication information and characteristic information of the first terminal, setting the first terminal to be in an RRC idle mode may include: When the characteristic information of the first terminal meets a first preset condition, the access network device triggers, based on the indication information, setting the first terminal to be in the RRC idle mode. This possible design provides a solution for setting the RRC mode of the terminal to the RRC idle mode with reference to the characteristic information of the terminal, so as to relieve overload of the access and mobility management network element. For a specific analysis process, refer to the following part of specific implementations.

In a possible design, that the characteristic information of the first terminal meets a first preset condition may include at least one of the following: a moving rate of the first terminal is greater than or equal to a first preset threshold; frequency with which the first terminal receives/sends data is less than or equal to a second preset threshold; frequency with which the first terminal switches between the RRC connected mode and the RRC inactive mode is less than or equal to a third preset threshold; frequency with which the first terminal is handed over between cells is greater than or equal to a fourth preset threshold; frequency with which the first terminal initiates an RNA update is greater than or equal to a fifth preset threshold; a moving track of the first terminal is not a preset moving track; or a moving range of the first terminal is greater than or equal to a preset range.

In a possible design, the indication information is further used to instruct to trigger setting, to be in the RRC idle mode, a terminal whose characteristic information meets the first preset condition.

Based on the possible design, optionally, that the access network device triggers, based on the indication information and characteristic information of the first terminal, setting the first terminal to be in an RRC idle mode includes: The access network device determines, based on the indication information, that the characteristic information of the first terminal meets the first preset condition; and triggers setting the first terminal to be in the RRC idle mode. In this optional implementation, the access network device determines, under an instruction of the access and mobility management network element, the terminal whose characteristic information meets the first preset condition.

For example, the indication information may be an overload start message used to instruct to trigger setting, to be in the RRC idle mode, the terminal whose characteristic information meets the first preset condition; or may be an information element in an overload start message. The information element may include a terminal type to instruct to trigger setting, to be in the RRC idle mode, the terminal whose characteristic information meets the first preset condition. The type may include at least one of the following: a high-speed moving type, a low-frequency data receiving/sending type, a non-frequent RRC mode switching type, a frequent cell handover type, a frequent RNA update type, a non-preset-moving-track type, or a non-preset-range type.

In a possible design, that the access network device triggers, based on the indication information and characteristic information of the first terminal, setting the first terminal to be in an RRC inactive mode may include: When the characteristic information of the first terminal meets a second preset condition, the access network device triggers, based on the indication information, setting the first terminal to be in the RRC inactive mode. This possible design provides a specific implementation of setting the RRC mode of the terminal to the RRC inactive mode with reference to the characteristic information of the terminal, so as to relieve overload of the access and mobility management network element. For a specific analysis process, refer to the following part of specific implementations.

In a possible design, that the characteristic information of the first terminal meets a second preset condition may include at least one of the following: a moving rate of the first terminal is less than a first preset threshold; frequency with which the first terminal receives/sends data is greater than a second preset threshold; frequency with which the first terminal switches between the RRC connected mode and the RRC inactive mode is greater than a third preset threshold; frequency with which the first terminal is handed over between cells is less than a fourth preset threshold; frequency with which the first terminal initiates an RNA update is less than a fifth preset threshold; a moving track of the first terminal is a preset moving track; or a moving range of the first terminal is less than a preset range.

In a possible design, the indication information is further used to instruct to trigger setting, to be in the RRC inactive mode, a terminal whose characteristic information meets the second preset condition.

Based on the possible design, optionally, that the access network device triggers, based on the indication information and characteristic information of the first terminal, setting the first terminal to be in an RRC inactive mode includes: The access network device determines, based on the indication information, that the characteristic information of the first terminal meets the second preset condition; and triggers setting the first terminal to be in the RRC inactive mode. In this optional implementation, the access network device determines, under an instruction of the access and mobility management network element, the terminal whose characteristic information meets the second preset condition.

For example, the indication information may be an overload start message used to instruct to trigger setting, to be in the RRC inactive mode, the terminal whose characteristic information meets the second preset condition; or may be an information element in an overload start message. The information element may include a terminal type to instruct to trigger setting, to be in the RRC inactive mode, the terminal whose characteristic information meets the second preset condition. The type may include at least one of the following: a low-speed moving type, a high-frequency data receiving/sending type, a frequent RRC mode switching type, a non-frequent cell handover type, a non-frequent RNA update type, a preset-moving-track type, or a preset-range type.

According to a second aspect, an embodiment of this application provides an overload control method, including: An access and mobility management network element sends indication information to an access network device. The indication information is used to indicate that the access and mobility management network element is overloaded, and instruct to trigger setting, to be in an RRC idle mode, a terminal whose characteristic information meets a first preset condition. For a specific implementation in which the characteristic information meets the first preset condition, refer to the first aspect. Details are not described herein again.

According to a third aspect, an embodiment of this application provides an overload control method, including: An access and mobility management network element sends indication information to an access network device. The indication information is used to indicate that the access and mobility management network element is overloaded, and instruct to trigger setting, to be in an RRC inactive mode, a terminal whose characteristic information meets a second preset condition. For a specific implementation in which the characteristic information meets the second preset condition, refer to the first aspect. Details are not described herein again.

According to a fourth aspect, an embodiment of this application provides an overload control method, including: An access network device receives first indication information from an access and mobility management network element. The access network device receives second indication information from the access and mobility management network element. The second indication information is used to indicate that the access and mobility management network element is overloaded. When a terminal is in an RRC connected mode or an RRC inactive mode, and the first indication information is used to instruct the access network device to trigger, when the access and mobility management network element is overloaded, setting the terminal to be in an RRC idle mode, the access network device triggers, based on the second indication information, setting the terminal to be in the RRC idle mode. Alternatively, when a terminal is in an RRC connected mode, and the first indication information is used to instruct the access network device to trigger, when the access and mobility management network element is overloaded, setting the terminal to be in an RRC inactive mode, the access network device triggers, based on the second indication information, setting the terminal to be in the RRC inactive mode. This technical solution provides another technical solution for setting an RRC mode of a terminal based on characteristic information of the terminal when an access and mobility management network element is overloaded.

According to a fifth aspect, an embodiment of this application provides an overload control method, including: An access and mobility management network element sends first indication information to an access network device based on characteristic information of a terminal. The first indication information is used to instruct the access network device to trigger, when the access and mobility management network element is overloaded, setting the terminal to be in an RRC idle mode or an RRC inactive mode. This technical solution corresponds to the technical solution provided in the fourth aspect.

In a possible design, when the characteristic information of the terminal meets a first preset condition, the first indication information is used to instruct the access network device to trigger, when the access and mobility management network element is overloaded, setting the terminal to be in the RRC idle mode.

In a possible design, when the characteristic information of the terminal meets a second preset condition, the first indication information is used to instruct the access network device to trigger, when the access and mobility management network element is overloaded, setting the terminal to be in the RRC inactive mode.

According to a sixth aspect, an embodiment of this application provides an overload control method, including: An access and mobility management network element obtains RRC mode information of a terminal from an access network device. When the access and mobility management network element is overloaded, and the RRC mode information indicates that the terminal is in an RRC connected mode or an RRC inactive mode, the access and mobility management network element triggers, based on characteristic information of the terminal, setting the terminal to be in an RRC idle mode. Alternatively, when the access and mobility management network element is overloaded, and the RRC mode information indicates that the terminal is in an RRC connected mode, the access and mobility management network element triggers, based on characteristic information of the terminal, setting the terminal to be in an RRC inactive mode. This technical solution provides another technical solution for setting an RRC mode of a terminal based on characteristic information of the terminal when an access and mobility management network element is overloaded.

In a possible design, that the access and mobility management network element triggers, based on characteristic information of the terminal, setting the terminal to be in an RRC idle mode may include: When the characteristic information of the terminal meets a first preset condition, the access and mobility management network element triggers setting the terminal to be in the RRC idle mode.

In a possible design, that the access and mobility management network element triggers, based on characteristic information of the terminal, setting the terminal to be in an RRC inactive mode may include: When the characteristic information of the terminal meets a second preset condition, the access and mobility management network element triggers setting the terminal to be in the RRC inactive mode.

According to a seventh aspect, an embodiment of this application provides an overload control method, including: When an access and mobility management network element is overloaded, the access and mobility management network element sends indication information to an access network device based on characteristic information of a terminal. The indication information is used to instruct the access network device to trigger setting the terminal to be in an RRC idle mode or an RRC inactive mode. This technical solution provides another technical solution for setting an RRC mode of a terminal based on characteristic information of the terminal when an access and mobility management network element is overloaded.

In a possible design, when the characteristic information of the terminal meets a first preset condition, the indication information is used to instruct the access network device to trigger, when the access and mobility management network element is overloaded, setting the terminal to be in the RRC idle mode.

In a possible design, when the characteristic information of the terminal meets a second preset condition, the indication information is used to instruct the access network device to trigger, when the access and mobility management network element is overloaded, setting the terminal to be in the RRC inactive mode.

According to an eighth aspect, an embodiment of this application provides an overload control method, including: An access network device receives indication information sent by an access and mobility management network element. When the indication information is used to instruct to trigger setting a terminal to be in an RRC idle mode, the access network device triggers, when the terminal does not have data transmission, setting the terminal to be in the RRC idle mode. Alternatively, when the indication information is used to instruct to trigger setting a terminal to be in an RRC inactive mode, the access network device triggers, when the terminal does not have data transmission, setting the terminal to be in the RRC inactive mode. This technical solution corresponds to the technical solution provided in the seventh aspect.

According to a ninth aspect, an embodiment of this application provides an overload control method, including: An access and mobility management network element receives a request message from a terminal. The request message includes a registration request message or a service request message. When the access and mobility management network element is overloaded, and a type of the terminal is a first preset type, the access and mobility management network element sends first indication information to an access network device based on the request message. The first indication information is used to indicate that setting the terminal to be in an RRC inactive mode is not allowed to be triggered. This technical solution provides another technical solution for setting an RRC mode of a terminal based on characteristic information of the terminal when an access and mobility management network element is overloaded.

In a possible design, the first indication information is a first N2 message, and the first N2 message does not include assistance information. The assistance information is used by the access network device to trigger setting the terminal to be in the RRC inactive mode. N2 is short for "next generation interface 2".

In a possible design, the first indication information is carried in a first N2 message.

In a possible design, the first indication information is carried in a first N2 message, and the first indication information is the type of the terminal.

In a possible design, the terminal of the first preset type has at least one of the following characteristics: a moving rate is greater than or equal to a first preset threshold; data receiving/sending frequency is less than or equal to a second preset threshold; frequency of switching between an RRC connected mode and the RRC inactive mode is less than or equal to a third preset threshold; frequency of handover between cells is greater than or equal to a fourth preset threshold; frequency of initiating a radio access network notification area RNA update is greater than or equal to a fifth preset threshold; a moving track is not a preset moving track; or a moving range is greater than or equal to a preset range.

According to a tenth aspect, an embodiment of this application provides an overload control method, including: An access network device receives first indication information sent by an access and mobility management network element. The first indication information is used to indicate that a terminal is not allowed to enter an RRC inactive mode. When the terminal does not have data transmission, the access network device triggers, based on the first indication information, setting the terminal to be in an RRC idle mode. This technical solution corresponds to the technical solution provided in the ninth aspect.

For a specific implementation of the first indication information, refer to the ninth aspect. Details are not described herein again.

In a possible design, the first indication information is carried in a first N2 message, and the first indication information is a type of the terminal. That the access network device triggers, based on the first indication information when the terminal does not have data transmission, setting the terminal to be in an RRC idle mode may include: The access network device determines, based on the type of the terminal, that the terminal is not allowed to enter the RRC inactive mode; and when the terminal does not have data transmission, the access network device triggers setting the terminal to be in the RRC idle mode.

In a possible design, the terminal of a first preset type has at least one of the following characteristics: a moving rate is greater than or equal to a first preset threshold; data receiving/sending frequency is less than or equal to a second preset threshold; frequency of switching between an RRC connected mode and the RRC inactive mode is less than or equal to a third preset threshold; frequency of handover between cells is greater than or equal to a fourth preset threshold; frequency of initiating a radio access network notification area RNA update is greater than or equal to a fifth preset threshold; a moving track is not a preset moving track; or a moving range is greater than or equal to a preset range.

According to an eleventh aspect, an embodiment of this application provides an overload control method, including: An access and mobility management network element receives a request message from a terminal. The request message includes a registration request message or a service request message. When the access and mobility management network element is overloaded, and a type of the terminal is a second preset type, the access and mobility management network element sends second indication information to an access network device based on the request message. The second indication information is used to indicate that setting the terminal to be in an RRC inactive mode is allowed to be triggered. This technical solution provides another technical solution for setting an RRC mode of a terminal based on characteristic information of the terminal when an access and mobility management network element is overloaded.

In a possible design, the second indication information is carried in a second N2 message, the second N2 message further includes assistance information, and the second indication information is the type of the terminal. The assistance information is used by the access network device to trigger setting the terminal to be in the RRC inactive mode.

In a possible design, the terminal of the second preset type has at least one of the following characteristics: a moving rate is less than a first preset threshold; data receiving/sending frequency is greater than a second preset threshold; frequency of switching between an RRC connected mode and the RRC inactive mode is greater than a third preset threshold; frequency of handover between cells is less than a fourth preset threshold; frequency of initiating an RNA update is less than a fifth preset threshold; a moving track is a preset moving track; or a moving range is less than a preset range.

According to a twelfth aspect, an embodiment of this application provides an overload control method, including: An access network device receives second indication information sent by an access and mobility management network element. The second indication information is used to indicate that a terminal is allowed to enter an RRC inactive mode. When the terminal does not have data transmission, the access network device triggers, based on the second indication information, setting the terminal to be in the RRC inactive mode. This technical solution corresponds to the technical solution provided in the eleventh aspect.

For a specific implementation of the second indication information, refer to the eleventh aspect. Details are not described herein again.

In a possible design, the second indication information is carried in a second N2 message, the second N2 message further includes assistance information, and the second indication information is a type of the terminal. The assistance information is used by the access network device to trigger setting the terminal to be in the RRC inactive mode. That the access network device triggers, based on the second indication information when the terminal does not have data transmission, setting the terminal to be in the RRC inactive mode may include: The access network device determines, based on the type of the terminal and the assistance information, that the terminal is allowed to enter the RRC inactive mode; and when the terminal does not have data transmission, the access network device triggers setting the terminal to be in the RRC inactive mode.

In a possible design, the terminal of a second preset type has at least one of the following characteristics: a moving rate is less than a first preset threshold; data receiving/sending frequency is greater than a second preset threshold; frequency of switching between an RRC connected mode and the RRC inactive mode is greater than a third preset threshold; frequency of handover between cells is less than a fourth preset threshold; frequency of initiating an RNA update is less than a fifth preset threshold; a moving track is a preset moving track; or a moving range is less than a preset range.

It should be noted that, for beneficial effects, explanations of related features, specific implementations, and the like described in any one of the second aspect to the twelfth aspect, reference may be made to the first aspect. For example, for descriptions of related content about the characteristic information of the terminal, that the characteristic information of the terminal meets the first preset condition, and that the characteristic information of the terminal meets the second preset condition in the fifth aspect, the sixth aspect, the seventh aspect, the ninth aspect, and the eleventh aspect, reference may be made to the first aspect.

According to a thirteenth aspect, an embodiment of this application provides an overload control apparatus. The apparatus may be configured to perform any method provided in the first aspect. The apparatus may be specifically the access network device described in the first aspect. In an example, the apparatus may be a chip.

In a possible design, the apparatus may be divided into function modules based on the method provided in the first aspect. For example, the function modules may be obtained through division in one-to-one correspondence with functions, or two or more functions may be integrated into one processing module.

In a possible design, the apparatus may include a memory and a processor. The memory is configured to store program code. When the program code is executed by the processor, any method provided in the first aspect is enabled to be performed.

Similarly, an embodiment of this application further provides an overload control apparatus configured to perform any method provided in the second aspect to the twelfth aspect. For example, if the apparatus is configured to perform the method provided in the fourth aspect, the eighth aspect, the tenth aspect, or the twelfth aspect, the apparatus may be an access network device; if the apparatus is configured to perform the method provided in any one of the second aspect, the third aspect, the fifth aspect, the sixth aspect, the seventh aspect, the ninth aspect, and the eleventh aspect, the apparatus may be an access and mobility management network element.

In a possible design, the apparatus may be divided into function modules based on the method provided in the foregoing corresponding aspect. For example, the function modules may be obtained through division in one-to-one correspondence with functions, or two or more functions may be integrated into one processing module.

In a possible design, the apparatus may include a memory and a processor. The memory is configured to store program code. When the program code is executed by the processor, any method provided in the foregoing corresponding aspect is enabled to be performed.

According to a fourteenth aspect, an embodiment of this application provides a processing apparatus, configured to implement functions of the foregoing overload control apparatus. The processing apparatus includes a processor and an interface. The processing apparatus may be a chip. The processor may be implemented by hardware, or may be implemented by software. When the processor is implemented by hardware, the processor may be a logic circuit, an integrated circuit, or the like. When the processor is implemented by software, the processor may be a general purpose processor, implemented by reading software code stored in a memory. The memory may be integrated into the processor, or may be located outside the processor and exist independently.

An embodiment of this application further provides a computer readable storage medium. The computer readable storage medium stores program code, and the program code includes an instruction used to perform some or all of steps of any method provided in the first aspect to the twelfth aspect.

An embodiment of this application further provides a computer program product. When the computer program product is run on a computer, the computer is enabled to perform some or all of steps of any method provided in the first aspect to the twelfth aspect.

An embodiment of this application further provides an overload control system. The system may include: an access network device configured to perform the method provided in the first aspect; or an access network device configured to perform the method provided in the first aspect and an access and mobility management network element configured to perform the method provided in the second aspect/the third aspect; or an access network device configured to perform the method provided in the fourth aspect and an access and mobility management network element configured to perform the method provided in the fifth aspect; or an access and mobility management network element configured to perform the method provided in the sixth aspect; or an access and mobility management network element configured to perform the method provided in the seventh aspect and an access network device configured to perform the method provided in the eighth aspect; or an access and mobility management network element configured to perform the method provided in the ninth aspect and an access network device configured to perform the method provided in the tenth aspect; or an access and mobility management network element configured to perform the method provided in the eleventh aspect and an access network device configured to perform the method provided in the twelfth aspect.

For specific implementations and beneficial effects of any overload control apparatus, the processing apparatus, the computer readable storage medium, the computer program product, and the like that are provided above, refer to the foregoing first aspect. Details are not described herein again.

### BRIEF DESCRIPTION OF DRAWINGS

FIG. 1 is a schematic diagram of a 5G network architecture applicable to embodiments of this application;
FIG. 2 is a schematic diagram of an AN release procedure applicable to embodiments of this application;
FIG. 3 is a schematic diagram of an RRC connection release procedure applicable to embodiments of this application;
FIG. 4A is a first schematic diagram of an overload control method according to an embodiment of this application;
FIG. 4B is a second schematic diagram of an overload control method according to an embodiment of this application;
FIG. 4C is a third schematic diagram of an overload control method according to an embodiment of this application;
FIG. 5 is a fourth schematic diagram of an overload control method according to an embodiment of this application;
FIG. 6 is a fifth schematic diagram of an overload control method according to an embodiment of this application;
FIG. 7 is a sixth schematic diagram of an overload control method according to an embodiment of this application;
FIG. 8 is a seventh schematic diagram of an overload control method according to an embodiment of this application;
FIG. 9 is a schematic diagram of an overload control method according to an embodiment of this application;
FIG. 10 is a possible example block diagram of an apparatus according to an embodiment of this application; and
FIG. 11 is another possible example block diagram of an apparatus according to an embodiment of this application.

### DESCRIPTION OF EMBODIMENTS

The term "a plurality of' in this application means two or more than two. The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. In this application, the terms "first", "second", and so on are intended to distinguish between different objects but do not indicate a particular order of the objects.

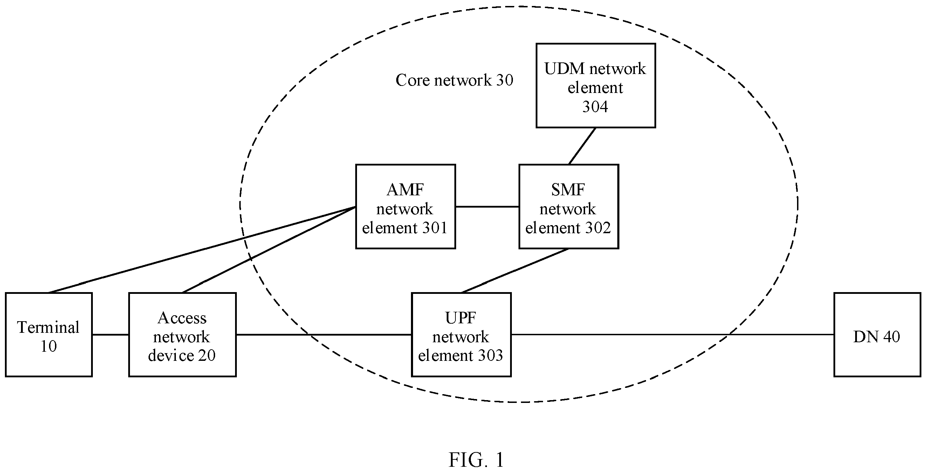

Technical solutions provided in embodiments of this application may be applied to a wireless communications system. The wireless communications system may be a 5G system or another future communications system. Certainly, the wireless communications system may alternatively be a long term evolution (long term evolution, LTE) system, an LTE-advanced (LTE-Advanced, LTE-A) system, or the like. For example, the wireless communications system is a 5G system. FIG. 1 is a schematic diagram of a 5G network architecture applicable to the embodiments of this application.

In FIG. 1, the 5G network architecture may include a terminal 10, an access network device 20, a core network 30, and a data network (data network, DN) 40. Core-network network elements (also referred to as core-network function network elements) in the core network 30 may include an AMF network element 301, a session management function (session management function, SMF) network element 302, a UPF network element 303, a unified data management (unified data management, UDM) network element 304, and the like. A connection between the foregoing network elements may be a wireless connection or a wired connection. For ease of intuitively representing a connection relationship between the network elements, a solid line is used for illustration in FIG. 1.

The terminal 10 may be various handheld devices, vehicle-mounted devices, wearable devices, or computing devices that have a wireless communication function, or another processing device connected to a wireless modem, or may be a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, user equipment (user equipment, UE), a mobile station (mobile station, MS), a terminal device (terminal device), relay user equipment, or the like. The relay user equipment may be, for example, a 5G home gateway (residential gateway, RG). For ease of description, these devices are all referred to as terminals (terminal) in this application.

The access network device 20 may be configured to provide a wireless connection, and is located between the terminal 10 and the core network 30. The access network device 20 may be a device such as a base station, an evolved NodeB (evolved node base station, eNB), a next generation NodeB (next generation node base station, gNB), a new radio base station (new radio eNB), a macro base station, a micro base station, a high frequency base station, or a transmission and reception point (transmission and reception point, TRP). It should be noted that the access network device 20 in the following may be understood as a network element in a RAN. This is noted herein for once and for all, and is not repeated in the following.

The AMF network element 301 may be used for connection management, mobility management, registration management, access authentication and authorization, reachability management, security context management, SMF network element selection, and the like.

The SMF network element 302 may be used for session management such as session establishment, modification, and release, UPF selection and control, service and session continuity (service and session continuity) mode selection, a roaming service, and the like.

The UPF network element 303 may be configured to process a user-plane event, for example, transmit or route a data packet, detect a data packet, report a traffic volume, process quality of service (quality of service, QoS), perform lawful interception, and store a downlink data packet.

The UDM network element 304 may be configured to store subscription data of a user, and the like.

The DN 40 may be, for example, an operator service, an Internet access service, or a third-party service.

It may be understood that the foregoing 5G network may further include another network element, for example, a policy control function (policy control function, PCF) network element, a network slice selection function (network slice selection function, NSSF) network element, a network repository function (network repository function, NRF) network element, or an authentication server function (authentication server function, AUSF) network element. This is not specifically limited in this application.

It should be noted that the communications devices in FIG. 1, such as the terminal, the access network device, the AMF network element, the SMF network element, the UPF network element, and the UDM network element, are merely names, and the names do not constitute any limitation on the devices. In the 5G network and another future network, these network elements may alternatively have other names, that is, network elements with same or similar functions. This is not specifically limited in the embodiments of this application. In addition, in the embodiments of this application, the AMF network element may be replaced with an AMF, an AMF entity, or the like, and the SMF network element may be replaced with an SMF, an SMF entity, or the like. This is noted herein for once and for all, and is not repeated in the following.

To help understand the technical solutions provided in this application, first, related technologies and terms in this application are briefly described.

RRC modes of a terminal include an RRC connected mode, an RRC inactive mode, and an RRC idle mode.

When the terminal is in the RRC connected mode, both a data radio bearer (data radio bearer, DRB) channel between the terminal and an access network device and an N3 data channel between the access network device and a UPF network element are already established. N3 is short for "next generation (next generation, N) network interface 3", and the N3 is an interface between the access network device and the UPF network element. When the terminal is in the RRC connected mode, data can be transmitted between the terminal and a DN (for example, the terminal sends data to the DN or receives data sent by the DN).

When the terminal is in the RRC inactive mode, the DRB channel between the terminal and the access network device is released, but the N3 data channel between the access network device and the UPF network element is retained. When the terminal is in the RRC inactive mode, data cannot be transmitted between the terminal and the DN.

When the terminal is in the RRC idle mode, both the DRB channel between the terminal and the access network device and the N3 data channel between the access network device and the UPF network element are released. When the terminal is in the RRC idle mode, data cannot be transmitted between the terminal and the DN.

In an example, when determining that the terminal does not have data transmission, the access network device triggers setting the terminal to be in the RRC inactive mode or the RRC idle mode. Specifically, if the terminal has a capability of being in the RRC inactive mode, and an AMF network element sends assistance information to the access network device in a registration procedure or a service request procedure, where the assistance information is used by the access network device to trigger setting the terminal to be in the RRC inactive mode, the access network device triggers, when the terminal does not have data transmission, setting the terminal to be in the RRC inactive mode. If the terminal does not have a capability of being in the RRC inactive mode, or the terminal has a capability of being in the RRC inactive mode, but an AMF network element does not send the foregoing assistance information to the access network device in a registration procedure and a service request procedure, the access network device triggers, when the terminal does not have data transmission, setting the terminal to be in the RRC idle mode.

That the terminal does not have data transmission may mean that the terminal does not receive, within a preset time period, data sent by the terminal to the DN, and/or the terminal does not receive, within a preset time period, data sent by the DN to the terminal. This is not limited in the embodiments of this application. The access network device may set the preset time period by setting timing duration of an inactivate timer (inactivate timer).

The foregoing example is merely an example of setting the terminal to be in the RRC inactive mode or the RRC idle mode, and does not constitute a limitation on a specific implementation, of setting the terminal to be in the RRC inactive mode or the RRC idle mode, provided in the embodiments of this application.

It should be noted that whether the terminal has the capability of being in the RRC inactive mode may be stored in subscription data of the terminal, or may be reported by the terminal to a network-side network element. Certainly, the embodiments of this application are not limited thereto. In addition, it should be noted that the AMF network element may or may not perceive whether the terminal has the capability of being in the RRC inactive mode. If the AMF perceives whether the terminal has the capability of being in the RRC inactive mode, the capability may be specifically reported by the terminal to the AMF network element, or may be obtained by the AMF network element based on subscription information of the terminal or the like. This is not limited in the embodiments of this application. In addition, the access network device may perceive whether the terminal has the capability of being in the RRC inactive mode. The capability may be specifically reported by the terminal to the access network device, or may be notified by the AMF network element to the access network device. This is not limited in the embodiments of this application.

When the terminal is in the RRC inactive mode, if the access network device determines that the terminal has data transmission, the access network device triggers switching the terminal from the RRC inactive mode to the RRC connected mode. When the terminal is in the RRC idle mode, if the access network device determines that the terminal has data transmission, the access network device triggers switching the terminal from the RRC idle mode to the RRC connected mode.

In an example, when the terminal is in the RRC inactive mode, the access network device allocates an RNA to the terminal, so as to page the terminal in an RNA range of the terminal when the access network device receives data sent by the DN to the terminal. If the terminal moves out of the RNA of the terminal, the terminal triggers an RNA update; or if an RNA update timer (RNA update timer) of the terminal expires, a periodic RNA update (periodic mobility RNA update) is triggered. The RNA update causes the access network device to trigger a path switch (path switch) interaction process between the access network device and the AMF network element (that is, a process of information exchange between the access network device and the AMF network element). This increases signaling processing load of the AMF network element. Particularly, for a terminal whose RNA is frequently updated, if the terminal is in the RRC inactive mode, signaling processing load of the AMF network element is more significantly increased. For example, the terminal whose RNA is frequently updated may include: a terminal whose RNA update timer duration is relatively short, for example, a terminal whose RNA update timer duration is less than duration that is of a periodic registration area update timer (periodic registration area update timer) and that is set by a core-network network element; a terminal whose RNA range is relatively small; or a terminal whose moving rate is relatively high. It may be understood that, when the terminal is in the idle mode, the access network device does not allocate an RNA to the terminal, and therefore, an RNA update is not triggered.

In another example, when the terminal is in the RRC idle mode, all protocol data unit (protocol data unit, PDU) sessions initiated and established by the terminal are in a non-activated state. If the terminal has mobile oriented (mobile oriented, MO) data (for example, data or signaling) transmission, the terminal initiates a service request (service request) procedure to activate a PDU session. In addition, when the terminal is in the RRC idle mode, the terminal may periodically perform a registration area update (registration area update, RAU). Both of these operations increase signaling processing load of the AMF network element. Particularly, for a terminal for which the N3 data channel between the access network device and the UPF network element is frequently restored, signaling processing load of the AMF network element is more significantly increased. It may be understood that, in a process in which the terminal enters the RRC inactive mode from the RRC inactive mode, the DRB channel between the terminal and the access network device is restored, and the N3 data channel between the access network device and the UPF network element is not restored.

Based on this, the embodiments of this application provide an overload control method and apparatus. The method specifically includes: when an AMF network element is overloaded, setting an RRC mode of a terminal based on characteristic information of the terminal, to effectively relieve overload of the AMF network element.

Optionally, the characteristic information of the terminal includes: a moving rate of the terminal, frequency with which the terminal receives/sends data, frequency with which the terminal switches between the RRC connected mode and the RRC inactive mode, frequency with which the terminal is handed over between cells, frequency with which the terminal initiates an RNA update, a moving track of the terminal, or a moving range of the terminal.

The moving rate of the terminal refers to a distance the terminal moves per unit time. If the terminal is in the RRC inactive mode, a higher moving rate of the terminal indicates higher RNA update frequency of the terminal, and this results in heavier signaling processing load of the AMF network element.

The frequency with which the terminal receives/sends data refers to a quantity of times the terminal receives/sends data per unit time. The frequency with which the terminal receives/sends data may be frequency with which the terminal receives data, frequency with which the terminal sends data, or frequency with which the terminal receives and sends data. If the terminal is in the RRC idle mode, a higher data receiving/sending rate of the terminal indicates more frequent restoration of an N3 data channel between an access network device and a UPF network element, and this results in heavier signaling processing load of the AMF network element.

The frequency with which the terminal switches between the RRC connected mode and the RRC inactive mode refers to a quantity of times the terminal switches between the RRC connected mode and the RRC inactive mode per unit time. Higher frequency with which the terminal switches between the RRC connected mode and the RRC inactive mode indicates more frequent restoration of the N3 data channel between the access network device and the UPF network element, and this results in heavier signaling processing load of the AMF network element. The frequency with which the terminal switches between the RRC connected mode and the RRC inactive mode may be replaced with frequency with which the terminal switches between a connection management (connection management, CM) connected state and a CM idle state.

The frequency with which the terminal is handed over between cells is handover frequency of a cell in which the terminal is located. It may be understood that, due to location movement of the terminal, the terminal may be handed over from a cell in which the terminal is located. Higher frequency with which the terminal is handed over between cells indicates a higher speed of the terminal and a larger moving range of the terminal, and if the terminal is in the RRC inactive mode, RNA update frequency of the terminal may be higher, resulting in heavier signaling processing load of the AMF network element. If a handed-over-from cell and a handed-over-to cell are managed by different access network devices (for example, base stations), the frequency with which the terminal is handed over between cells may also be considered as frequency of handover between access network devices.

The frequency with which the terminal initiates an RNA update refers to a quantity of RNA updates initiated by the terminal per unit time. For example, one RNA update is triggered each time the terminal moves out of an RNA of the terminal.

The moving track of the terminal is a track generated due to movement of the terminal. For example, if the terminal is a public transportation vehicle (such as a bus or a train), the moving track of the terminal is a traveling route of the public transportation vehicle. The access network device may allocate an RNA to the terminal based on the moving track of the terminal. This helps reduce RNA update frequency of the terminal. For example, if the terminal is a bus or a train, the AMF network element allocates, to the terminal, a strip-shaped RNA that covers the moving track of the terminal. It can be learned that the moving track of the terminal may be used to represent RNA update frequency, and therefore may affect signaling processing load of the AMF network element.

The moving range of the terminal is a location range of the terminal in a moving process. A larger moving range of the terminal indicates a higher probability that the terminal moves out of an RNA of the terminal, which causes the terminal to trigger an RNA update. This may affect signaling processing load of the AMF network element.

It should be noted that the foregoing listed characteristic information of the terminal is merely an example. During actual implementation, all terminal information that can directly or indirectly reflect (or affect) RNA update frequency of the terminal or can directly or indirectly reflect (or affect) restoration frequency of the N3 data channel between the access network device and the UPF network element may be used as the "characteristic information of the terminal" described in the embodiments of this application.

Optionally, the characteristic information of the terminal may be obtained based on at least one of historical record information of the terminal and subscription information of the terminal. The characteristic information of the terminal may be obtained by the access network device. For example, the access network device may obtain the characteristic information of the terminal based on at least one of historical record information that is of the terminal and that is collected by the access network device, historical record information that is of the terminal and that is sent by a core-network network element (for example, the AMF network element), and the subscription information of the terminal. For another example, the characteristic information of the terminal may be obtained by the AMF network element. For example, the AMF network element may obtain the characteristic information of the terminal based on at least one of historical record information that is of the terminal and that is collected by the AMF network element, historical record information that is of the terminal and that is reported by the access network device, and the subscription information of the terminal.

The historical record information of the terminal may include at least one of the following: location information of the terminal, moving time information of the terminal, the moving rate of the terminal, an RNA range of the terminal, RAU initiation information of the terminal, cell handover information of the terminal, data receiving/sending frequency information of the terminal, a historical RRC mode or CM state of the terminal, moving track information of the terminal, moving range information of the terminal, or the like.

The subscription information of the terminal may include a qualitatively described type of the terminal. For example, if the terminal is a bus, the terminal may be a terminal of a high-speed moving type. If the terminal is a meter reading device, the terminal may be a static-type terminal. If the terminal is a monitoring device, the terminal has fixed data sending frequency/a fixed data sending period, and the terminal may be a terminal of a high-frequency data receiving/sending type. If the terminal is a train, the terminal has a fixed moving track, and therefore, the terminal may be a terminal of a preset-track type. If the terminal is an enterprise terminal, that is, the terminal moves within an extent of an enterprise campus, the moving range of the terminal is fixed/limited, and therefore, the terminal may be a terminal with a preset range.

In some embodiments of this application, if the characteristic information of the terminal meets a first preset condition, the terminal is switched from the RRC connected mode or the RRC inactive mode to the RRC idle mode. A process of switching from the RRC connected mode or the RRC inactive mode to the RRC idle mode may be triggered by the access network device, or may be triggered by the AMF network element. For a specific example, refer to the following.

That the characteristic information of the terminal meets a first preset condition may include at least one of the following: the moving rate of the terminal is greater than or equal to a first preset threshold; the frequency with which the terminal receives/sends data is less than or equal to a second preset threshold; the frequency with which the terminal switches between the RRC connected mode and the RRC inactive mode is less than or equal to a third preset threshold; the frequency with which the terminal is handed over between cells is greater than or equal to a fourth preset threshold; the frequency with which the terminal initiates an RNA update is greater than or equal to a fifth preset threshold; the moving track of the terminal is not a preset moving track; or the moving range of the terminal is greater than or equal to a preset range. It can be learned from the foregoing analysis that this embodiment helps relieve overload of the AMF network element.

In some embodiments of this application, if the characteristic information of the terminal meets a second preset condition, the terminal is switched from the RRC connected mode to the RRC inactive mode. A process of switching from the RRC connected mode to the RRC idle mode may be triggered by the access network device, or may be triggered by the AMF network element. For a specific example, refer to the following.

That the characteristic information of the terminal meets a second preset condition includes at least one of the following: the moving rate of the terminal is less than a first preset threshold; the frequency with which the terminal receives/sends data is greater than a second preset threshold; the frequency with which the terminal switches between the RRC connected mode and the RRC inactive mode is greater than a third preset threshold; the frequency with which the terminal is handed over between cells is less than a fourth preset threshold; the frequency with which the terminal initiates an RNA update is less than a fifth preset threshold; the moving track of the terminal is a preset moving track; or the moving range of the terminal is less than a preset range.

A specific analysis process in which this embodiment helps relieve overload of the AMF network element can be obtained through inference based on the foregoing descriptions. Details are not described herein again. It can be learned from the foregoing analysis that this embodiment helps relieve overload of the AMF network element.

Specific values of the first preset threshold, the second preset threshold, the third preset threshold, the fourth preset threshold, and the fifth preset threshold are not limited in the embodiments of this application. For example, the values may be determined based on an actual requirement (for example, a control degree of overload of the AMF network element). The preset moving track may be a fixed traveling route of the terminal (for example, a bus or a train). In addition, the preset range may be an RNA of the terminal. The RNA may include one or more cells or one or more tracking areas (tracking area, TA).

In some embodiments of this application, when the characteristic information of the terminal meets the first preset condition, it may be considered that a type of the terminal is a first preset type; when the characteristic information of the terminal meets the second preset condition, it may be considered that a type of the terminal is a second preset type.

For example, if that the characteristic information of the terminal meets a first preset condition includes that the moving rate of the terminal is greater than or equal to the first preset threshold, the first preset type may be a high-speed moving type. Correspondingly, if that the characteristic information of the terminal meets a second preset condition includes that the moving rate of the terminal is less than the first preset threshold, the second preset type may be a low-speed moving type. Alternatively, if that the characteristic information of the terminal meets a first preset condition includes that the moving rate of the terminal is greater than or equal to the first preset threshold, the first preset type may be a moving type. Correspondingly, if that the characteristic information of the terminal meets a second preset condition includes that the moving rate of the terminal is less than the first preset threshold, the second preset type may be a static type (or a fixed type).

For example, if that the characteristic information of the terminal meets a first preset condition includes that the frequency with which the terminal receives/sends data is less than or equal to the second preset threshold, the first preset type may be a low-frequency data receiving/sending type. Correspondingly, if that the characteristic information of the terminal meets a second preset condition includes that the frequency with which the terminal receives/sends data is greater than the second preset threshold, the second preset type may be a high-frequency data receiving/sending type.

For example, if that the characteristic information of the terminal meets a first preset condition includes that the frequency with which the terminal switches between the RRC connected mode and the RRC inactive mode is less than or equal to the third preset threshold, the first preset type may be a non-frequent (or low-frequency) RRC mode switching type. Correspondingly, if that the characteristic information of the terminal meets a second preset condition includes that the frequency with which the terminal switches between the RRC connected mode and the RRC inactive mode is greater than the third preset threshold, the second preset threshold may be a frequent (or high-frequency) RRC mode switching type.

For example, if that the characteristic information of the terminal meets a first preset condition includes that the frequency with which the terminal is handed over between cells is greater than or equal to the fourth preset threshold, the first preset type may be a frequent (or high-frequency) cell handover type. Correspondingly, if that the characteristic information of the terminal meets a second preset condition includes that the frequency with which the terminal is handed over between cells is less than the fourth preset threshold, the second preset type may be a non-frequent (or low-frequency) cell handover type.

For example, if that the characteristic information of the terminal meets a first preset condition includes that the frequency with which the terminal initiates an RNA update is greater than or equal to the fifth preset threshold, the first preset type may be a frequent (or high-frequency) RNA update type. Correspondingly, if that the characteristic information of the terminal meets a second preset condition includes that the frequency with which the terminal initiates an RNA update is less than the fifth preset threshold, the second preset type may be a non-frequent (or low-frequency) RNA update type.

For example, if that the characteristic information of the terminal meets a first preset condition includes that the moving track of the terminal is not a preset moving track, the first preset type may be a non-preset-moving-track type. Correspondingly, if that the characteristic information of the terminal meets a second preset condition includes that the moving track of the terminal is a preset moving track, the first preset type may be a preset-moving-track type.

For example, if that the characteristic information of the terminal meets a first preset condition includes that the moving range of the terminal is not a preset range, the first preset type may be a non-preset-range type. Correspondingly, if that the characteristic information of the terminal meets a second preset condition includes that the moving range of the terminal is a preset range, the first preset type may be a preset-range type.

For example, if that the characteristic information of the terminal meets a first preset condition includes that the moving rate of the terminal is greater than or equal to the first preset threshold and the frequency with which the terminal receives/sends data is less than or equal to the second preset threshold, the first preset type may be a high-speed moving and low-frequency data receiving/sending type. Correspondingly, if that the characteristic information of the terminal meets a second preset condition includes that the moving rate of the terminal is less than the first preset threshold and the frequency with which the terminal receives/sends data is greater than the second preset threshold, the second preset type may be a low-speed moving and high-frequency data receiving/sending type. Other examples are not listed one by one.

The following describes a specific implementation of setting the terminal to be in the RRC idle mode.

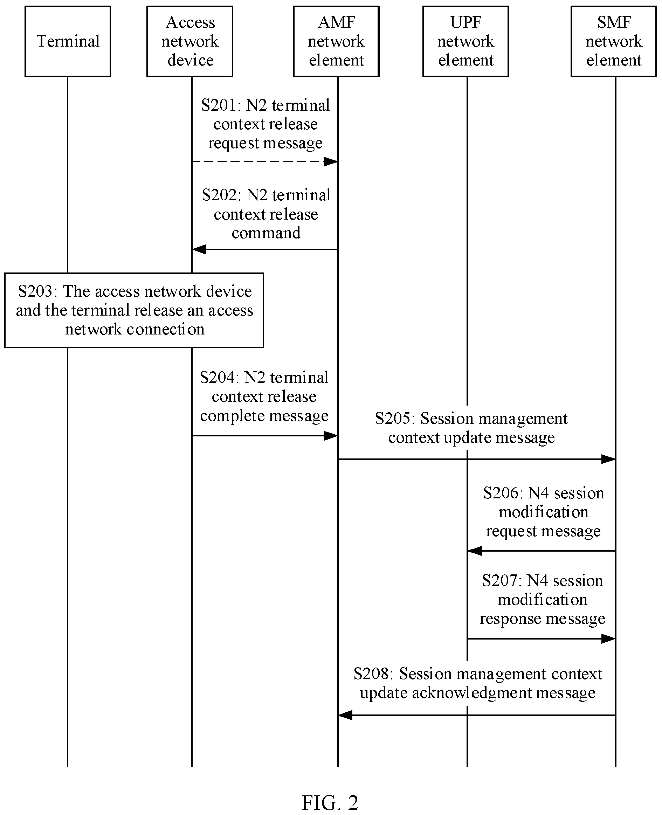

In an example, the terminal may enter the RRC idle mode from the RRC connected mode or the RRC inactive mode through an access network release (AN release) procedure. FIG. 2 is a schematic diagram of an AN release procedure applicable to the embodiments of this application. Specifically, the following steps may be included.

S201: An access network device sends an N2 terminal context release request (N2 UE context release request) message to an AMF network element. The N2 terminal context release request message is used to request to release a context of a terminal. The N2 terminal context release request message may include identification information of the terminal, for example, an NG-RAN UE NGAP ID or an NG-RAN UE N2-AP ID. The NG-RAN UE NGAP ID is a next generation application protocol (next generation application protocol, NGAP) identifier that is of the terminal and that is allocated by a next generation access network device. The NG-RAN UE N2-AP ID is a next generation N2 interface application protocol identifier that is of the terminal and that is allocated by a next generation access network device.

S202: The AMF network element releases the context of the terminal based on the N2 terminal context release request message, and then sends an N2 terminal context release command (N2 UE context release command) to the access network device.

S203: The access network device releases an access network connection between the access network device and the terminal (that is, releases a DRB channel between the access network device and the terminal) based on the N2 terminal context release command.

S204: After performing S203, the access network device sends an N2 terminal context release complete (N2 UE context release complete) message to the AMF network element.

S205: The AMF network element sends a session management context update (Nsmf_PDUSession_UpdateSMContext) message to an SMF network element. The session management context update message is used by the SMF network element to deactivate a PDU session of the terminal.

S206: The SMF network element sends an N4 session modification request (N4 session modification request) message to a UPF network element.

S207: The UPF network element deletes AN channel information (Tunnel Info of AN) of the PDU session of the terminal based on the N4 session modification request message, and sends an N4 session modification response (N4 session modification response) message to the SMF network element.

S208: The SMF network element sends a session management context update acknowledgment (Nsmf_PDUSession_UpdateSMContext Ack) message to the UPF network element.

It may be understood that, if the access network device triggers switching the terminal from the RRC connected mode or the RRC inactive mode to the RRC idle mode, S201 to S208 may be performed; if the AMF network element triggers switching the terminal from the RRC connected mode or the RRC inactive mode to the RRC idle mode, S202 to S208 may be performed.

It should be noted that, in a process of switching the terminal from the RRC inactive mode to the RRC idle mode, optionally, before S203 is performed, the method may further include: The access network device pages the terminal, so that the terminal is connected to the access network device or another access network device. Then, the connected access network device performs S203. Alternatively, optionally, the access network device may not page the terminal, but delete context information of the terminal (in this case, an RRC mode of the terminal recorded in the access network device is the RRC idle mode); when the terminal connects to the access network device next time, the terminal sends an RRC connection resume request message to the access network device; after receiving an RRC connection resume request, the access network device sends an RRC connection resume failure message to the terminal; after receiving the RRC connection resume failure message, the terminal changes the RRC mode of the terminal to the RRC idle mode.

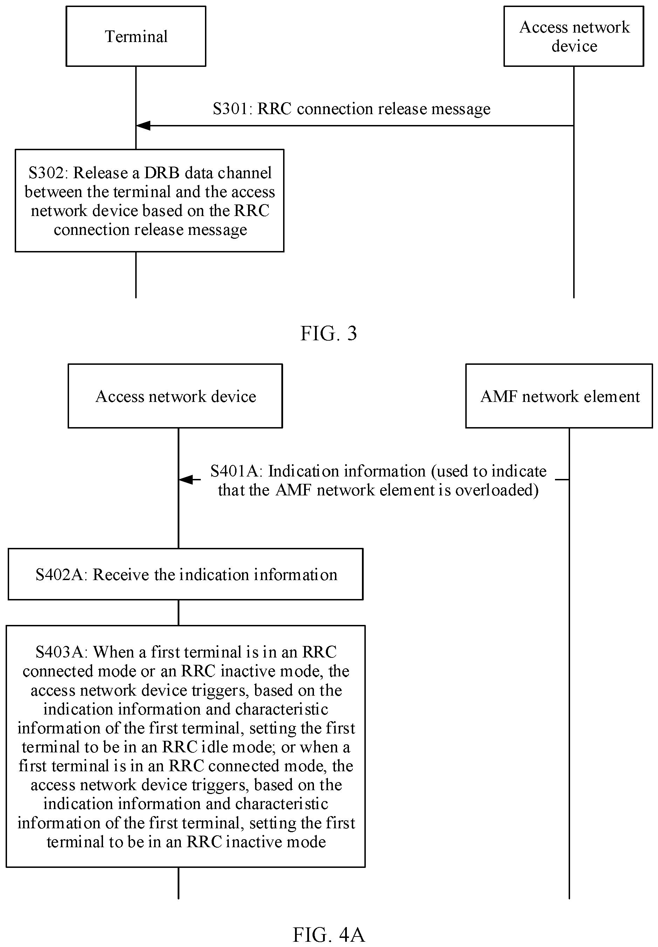

In an example, the terminal may enter the RRC inactive mode from the RRC connected mode through an RRC connection release procedure. FIG. 3 is a schematic diagram of an RRC connection release procedure applicable to the embodiments of this application. Specifically, the following steps may be included.

S301: An access network device sends an RRC connection release message to a terminal, where the RRC connection release message is used to instruct to set the terminal to be in the RRC inactive mode.

S302: The terminal releases a DRB channel between the terminal and the access network device based on the RRC connection release message.

The following describes the technical solutions provided in the embodiments of this application, with reference to the accompanying drawings. Specifically, the following provides descriptions by using an example in which the embodiments of this application are applied to the system architecture shown in FIG. 1.

It should be noted that an access and mobility management network element described in the embodiments of this application may be used for connection management, mobility management, registration management, access authentication and authorization, reachability management, security context management, SMF network element selection, and the like, for example, may be the AMF network element 301 in FIG. 1. An access network device described in the embodiments of this application may be the access network device 20 in FIG. 1. A terminal described in this application may be specifically the terminal 10 in FIG. 1.

FIG. 4A is a schematic diagram of an overload control method according to an embodiment of this application. The method shown in FIG. 4A may include the following steps.

S401A: An AMF network element sends indication information to an access network device, where the indication information is used to indicate that the AMF network element is overloaded.

Step S401 may include or be replaced with the following: When determining that the AMF network element is overloaded, the AMF network element sends the indication information to the access network device, or when the AMF network element is overloaded, the AMF network element sends the indication information to the access network device. How the AMF network element determines that the AMF network element is overloaded is not limited in this embodiment of this application. For example, when computing processing resource usage of the AMF network element is greater than or equal to a preset threshold (for example, 99%), the AMF network element determines that the AMF network element is overloaded.

Optionally, the indication information is an overload start (overload start) message. Certainly, this application is not limited thereto.

Optionally, the indication information is further used to instruct to trigger setting, to be in an RRC idle mode, a terminal whose characteristic information meets a first preset condition, that is, instruct the access network device to trigger setting, to be in the RRC idle mode, the terminal whose characteristic information meets the first preset condition.

Optionally, the indication information is further used to instruct to trigger setting, to be in an RRC inactive mode, a terminal whose characteristic information meets a second preset condition, that is, instruct the access network device to trigger setting, to be in the RRC inactive mode, the terminal whose characteristic information meets the second preset condition.

S402A: The access network device receives the indication information.

S403A: When a first terminal is in an RRC connected mode or the RRC inactive mode, the access network device triggers, based on the indication information and characteristic information of the first terminal, setting the first terminal to be in the RRC idle mode; or when a first terminal is in an RRC connected mode, the access network device triggers, based on the indication information and characteristic information of the first terminal, setting the first terminal to be in the RRC inactive mode.

It should be noted that "or" in step S403A may be replaced with "and". This is not limited.

The word "first" in the "first terminal" imposes no limitation on the terminal, and may refer to one terminal or any terminal. This is not limited.

For a process of setting the first terminal to be in the RRC idle mode, refer to the method shown in FIG. 2. For example, the process is implemented by performing S201 to S208. The access network device may perform S201 to trigger setting the first terminal to be in the RRC idle mode.

For a process of setting the first terminal to be in the RRC inactive mode, refer to the method shown in FIG. 3. For example, the process is implemented by performing S301 and S302. The access network device may perform S301 to trigger setting the first terminal to be in the RRC idle mode.

The access network device may determine, based on the indication information, that the AMF network element is overloaded. For example, the access network device may determine, by identifying that a received message is an overload start message, that the AMF network element is overloaded. How the access network device determines whether a message is an overload start message is described in detail in the prior art, and details are not described herein.

It may be understood that the access network device may be configured to manage an RRC mode of the first terminal. Therefore, the access network device may determine whether the first terminal is in the RRC connected mode or the RRC inactive mode.

Optionally, that the access network device triggers, based on the indication information and characteristic information of the first terminal, setting the first terminal to be in the RRC idle mode may include: When the characteristic information of the first terminal meets the first preset condition, the access network device triggers, based on the indication information, setting the first terminal to be in the RRC idle mode; or based on the indication information, the access network device triggers setting, to be in the RRC idle mode, the first terminal whose characteristic information meets the first preset condition; or the access network device determines, based on the indication information, that the characteristic information of the first terminal meets the first preset condition, and triggers setting the first terminal device to be in the RRC idle mode.

For example, for how the access network device triggers, based on the indication information, setting the first terminal whose characteristic information meets the first preset condition to be in the RRC idle mode, refer to related descriptions in 403B. Details are not described again.

For example, when the first terminal is in the RRC connected mode or the RRC inactive mode, the characteristic information of the first terminal meets the first preset condition, and the access network device determines, based on the indication information, that the AMF network element is overloaded, the access network device triggers setting the first terminal to be in the RRC idle mode. The indication information may be used as a trigger condition to trigger execution of a subsequent action. This is not limited.

For example, when the indication information is further used to instruct to trigger setting, to be in the RRC idle mode, the terminal whose characteristic information meets the first preset condition, that the access network device triggers, based on the indication information and characteristic information of the first terminal, setting the first terminal to be in the RRC idle mode includes: The access network device determines, based on the indication information, that the characteristic information of the first terminal meets the first preset condition, and triggers setting the first terminal device to be in the RRC idle mode.

Optionally, in S403A, "when a first terminal is in an RRC connected mode or the RRC inactive mode, the access network device triggers, based on the indication information and characteristic information of the first terminal, setting the first terminal to be in the RRC idle mode" is replaced with the following: When the first terminal is in the RRC connected mode, the characteristic information of the first terminal meets the first preset condition, and the access network device determines, based on the indication information, that the AMF network element is overloaded, if the first terminal does not have data transmission (for example, does not have data transmission within a preset time period), the access network device triggers setting the first terminal to be in the RRC idle mode.

Optionally, that the access network device triggers, based on the indication information and characteristic information of the first terminal, setting the first terminal to be in the RRC inactive mode may include: When the characteristic information of the first terminal meets the second preset condition, the access network device triggers, based on the indication information, setting the first terminal to be in the RRC inactive mode; or based on the indication information, the access network device triggers setting, to be in the RRC inactive mode, the first terminal whose characteristic information meets the second preset condition; or the access network device determines, based on the indication information, that the characteristic information of the first terminal meets the second preset condition, and triggers setting the first terminal to be in the RRC inactive mode.

For example, when the first terminal is in the RRC connected mode, the characteristic information of the first terminal meets the second preset condition, and the access network device determines that the AMF network element is overloaded, the access network device triggers setting the first terminal to be in the RRC inactive mode. The indication information may be used as a trigger condition to trigger execution of a subsequent action. This is not limited.

For example, when the indication information is further used to instruct to trigger setting, to be in the RRC inactive mode, the terminal whose characteristic information meets the second preset condition, that the access network device triggers, based on the indication information and characteristic information of the first terminal, setting the first terminal to be in the RRC inactive mode includes: The access network device determines, based on the indication information, that the characteristic information of the first terminal meets the second preset condition, and triggers setting the first terminal device to be in the RRC inactive mode.

For example, for how the access network device triggers, based on the indication information, setting the first terminal whose characteristic information meets the first preset condition to be in the RRC idle mode, refer to related descriptions in 403B. Details are not described again.

Optionally, in S403A, "when a first terminal is in an RRC connected mode, the access network device triggers, based on the indication information and characteristic information of the first terminal, setting the first terminal to be in the RRC inactive mode" is replaced with the following: When the first terminal is in the RRC connected mode, the characteristic information of the first terminal meets the second preset condition, and the access network device determines, based on the indication information, that the AMF network element is overloaded, if the first terminal does not have data transmission (for example, does not have data transmission within a preset time period), the access network device triggers setting the first terminal to be in the RRC inactive mode.

For related content about the characteristic information of the terminal, a manner in which the access network device obtains the characteristic information of the terminal, whether the characteristic information of the terminal meets the first preset condition or the second preset condition, and the like, refer to the foregoing descriptions.

A sequence of determining, by the access network device, an RRC mode of the first terminal, determining, by the access network device, whether the characteristic information of the first terminal meets the first preset condition or the second preset condition, and receiving, by the access network device, the indication information used to indicate that the AMF network element is overloaded is not limited in this embodiment of this application. For example, these steps may be performed at the same time, or may be sequentially performed. For example, the access network device may first determine whether the characteristic information of the terminal meets the first preset condition or the second preset condition (for example, first determine, based on the characteristic information of the terminal, whether a type of the terminal is a first preset type or a second preset type), and then determine the RRC mode of the terminal after receiving the indication information used to indicate that the AMF network element is overloaded.

In the overload control method provided in this embodiment, after receiving the indication information that is sent by the AMF network element and that is used to indicate that the AMF network element is overloaded, the access network device sets the RRC mode of the terminal based on the characteristic information of the terminal. This technical solution helps relieve overload of the AMF network element. For a specific analysis process, refer to the foregoing descriptions.

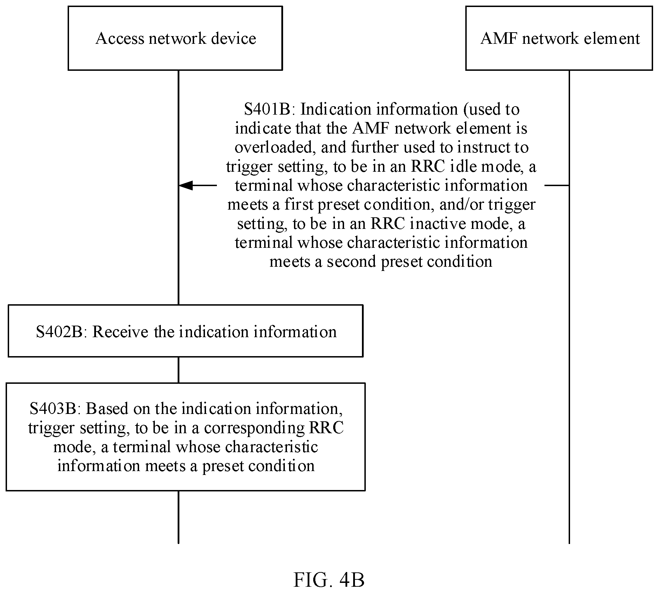

FIG. 4B is a schematic diagram of an overload control method according to an embodiment of this application. The embodiment shown in FIG. 4B may be considered as a specific example of the embodiment shown in FIG. 4A. The method shown in FIG. 4B may include the following steps.

S401B: An AMF network element sends indication information to an access network device.

The indication information is used to indicate that the AMF network element is overloaded. The indication information is further used to instruct to trigger setting, to be in an RRC idle mode, a terminal whose characteristic information meets a first preset condition, and/or trigger setting, to be in an RRC inactive mode, a terminal whose characteristic information meets a second preset condition.

Step S401B may include or be replaced with the following: When the AMF network element is overloaded, the AMF network element sends the indication information to the access network device.

Optionally, the indication information may be a message. Information used to instruct to trigger setting, to be in the RRC idle mode, the terminal whose characteristic information meets the first preset condition and/or information used to instruct to trigger setting, to be in the RRC inactive mode, the terminal whose characteristic information meets the second preset condition may be an information element in the message. For example, the message may be an overload start message. The information used to instruct to trigger setting, to be in the RRC idle mode, the terminal whose characteristic information meets the first preset condition and/or the information used to instruct to trigger setting, to be in the RRC inactive mode, the terminal whose characteristic information meets the second preset condition may be an information element in the overload start message.

Alternatively, the indication information is used to indicate that the AMF network element is overloaded, and the indication information is further used to instruct to trigger setting a terminal of a first preset type to be in the RRC idle mode. For example, the indication information includes the first preset type, to instruct to trigger setting the terminal of the first preset type to be in the RRC idle mode. The first preset type may include at least one of the following: a high-speed moving type, a low-frequency data receiving/sending type, a non-frequent RRC mode switching type, a frequent cell handover type, a frequent RNA update type, a non-preset-moving-track type, or a non-preset-range type.

Alternatively, the indication information is used to indicate that the AMF network element is overloaded, and the indication information is further used to instruct to trigger setting a terminal of a second preset type to be in the RRC inactive mode. For example, the indication information includes the second preset type, to instruct to trigger setting the terminal of the second preset type to be in the RRC inactive mode. The second preset type may include at least one of the following: a low-speed moving type, a high-frequency data receiving/sending type, a frequent RRC mode switching type, a non-frequent cell handover type, a non-frequent RNA update type, a preset-moving-track type, or a preset-range type.

S402B: The access network device receives the indication information.

S403B: Based on the indication information, the access network device triggers setting, to be in a corresponding RRC mode, a terminal whose characteristic information meets a preset condition.

Step S403B may specifically include one of the following cases:
Case 1: If the indication information is used to instruct to trigger setting, to be in the RRC idle mode, the terminal whose characteristic information meets the first preset condition, the access network device triggers, based on the indication information, setting the terminal whose characteristic information meets the first preset condition to be in the RRC idle mode. For example, the access network device triggers setting, to be in the RRC idle mode, a first terminal whose characteristic information meets the first preset condition.
Case 2: If the indication information is used to instruct to trigger setting, to be in the RRC inactive mode, the terminal whose characteristic information meets the second preset condition, the access network device triggers, based on the indication information, setting the terminal whose characteristic information meets the second preset condition to be in the RRC inactive mode. For example, the access network device triggers setting, to be in the RRC inactive mode, a first terminal whose characteristic information meets the second preset condition.
Case 3: If the indication information is used to trigger setting, to be in the RRC idle mode, the terminal whose characteristic information meets the first preset condition, and trigger setting, to be in the RRC inactive mode, the terminal whose characteristic information meets the second preset condition, the access network device triggers, based on the indication information, setting the terminal whose characteristic information meets the first preset condition to be in the RRC idle mode, and triggers, based on the indication information, setting the terminal whose characteristic information meets the second preset condition to be in the RRC inactive mode.

The triggering, based on the indication information, setting the terminal whose characteristic information meets the first preset condition to be in the RRC idle mode may include: determining, based on the indication information, the terminal whose characteristic information meets the first preset condition, and then setting the determined terminal whose characteristic information meets the first preset condition to be in the RRC idle mode.

The triggering, based on the indication information, setting the terminal whose characteristic information meets the second preset condition to be in the RRC inactive mode may include: determining, based on the indication information, the terminal whose characteristic information meets the second preset condition, and then setting the determined terminal whose characteristic information meets the second preset condition to be in the RRC inactive mode.

For related content about the characteristic information of the terminal, a manner in which the access network device obtains the characteristic information of the terminal, whether the characteristic information meets the first preset condition or the second preset condition, determining, based on the indication information, that the AMF network element is overloaded, and the like, refer to the foregoing descriptions.

In the overload control method provided in this embodiment, after receiving the indication information that is sent by the AMF network element and that is used to indicate that the AMF network element is overloaded, the access network device sets an RRC mode of the terminal based on the characteristic information of the terminal. This technical solution helps relieve overload of the AMF network element. For a specific analysis process, refer to the foregoing descriptions.

In the embodiment shown in FIG. 4B, descriptions are provided by using an example in which information used to indicate that the AMF network element is overloaded and information used to instruct to trigger setting the RRC mode of the terminal are the same information. Alternatively, information used to indicate that the AMF network element is overloaded and information used to instruct to trigger setting the RRC mode of the terminal may be two separate pieces of information, and the two pieces of information may be carried as information elements in a same message or different messages, or either of the two pieces of information may be a message.

The information used to instruct to trigger setting the RRC mode of the terminal may include: information (referred to as information 1 below) used to instruct to trigger setting, to be in the RRC idle mode, the terminal whose characteristic information meets the first preset condition, and/or information (referred to as information 2 below) used to trigger setting, to be in the RRC inactive mode, the terminal whose characteristic information meets the second preset condition. If the information used to instruct to trigger setting the RRC mode of the terminal includes the information 1 and the information 2, the information 1 and the information 2 may be a same piece of information, or may be two separate pieces of information. If the information 1 and the information 2 are two separate pieces of information, the two pieces of information may be carried as information elements in a same message or different messages, or either of the two pieces of information may be a message.

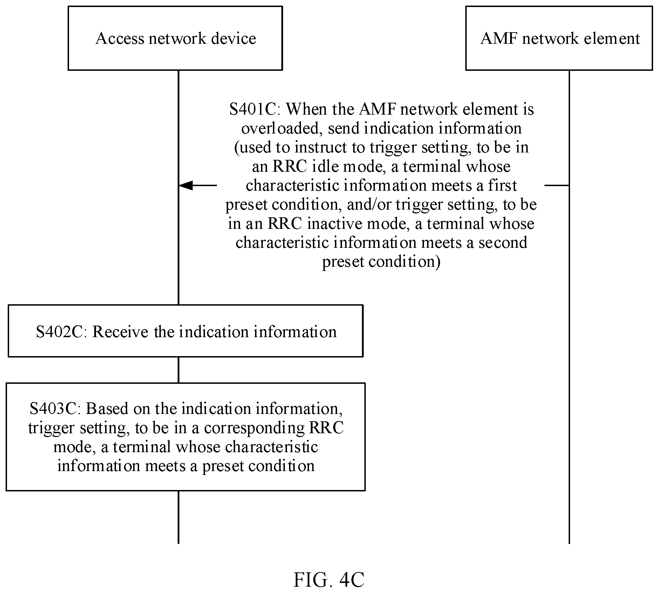

In both the embodiment shown in FIG. 4B and the alternative embodiment of FIG. 4B, the AMF network element sends, to the access network device, the information used to indicate that the AMF network element is overloaded. Alternatively, the AMF network element may not send, to the access network device, the information used to indicate that the AMF network element is overloaded. A specific solution may be shown in FIG. 4C.

FIG. 4C is a schematic diagram of an overload control method according to an embodiment of this application. The method shown in FIG. 4C may include the following steps.

S401C: When an AMF network element is overloaded, the AMF network element sends indication information to an access network device.

The indication information is used to instruct to trigger setting, to be in an RRC idle mode, a terminal whose characteristic information meets a first preset condition, and/or trigger setting, to be in an RRC inactive mode, a terminal whose characteristic information meets a second preset condition.

Step S401C may include: The AMF network element determines, based on load information of the AMF network element, that the AMF network element is overloaded; and sends the indication information to the access network device after determining that the AMF network element is overloaded.

For S402C and S403C, refer to S402B and S403B.

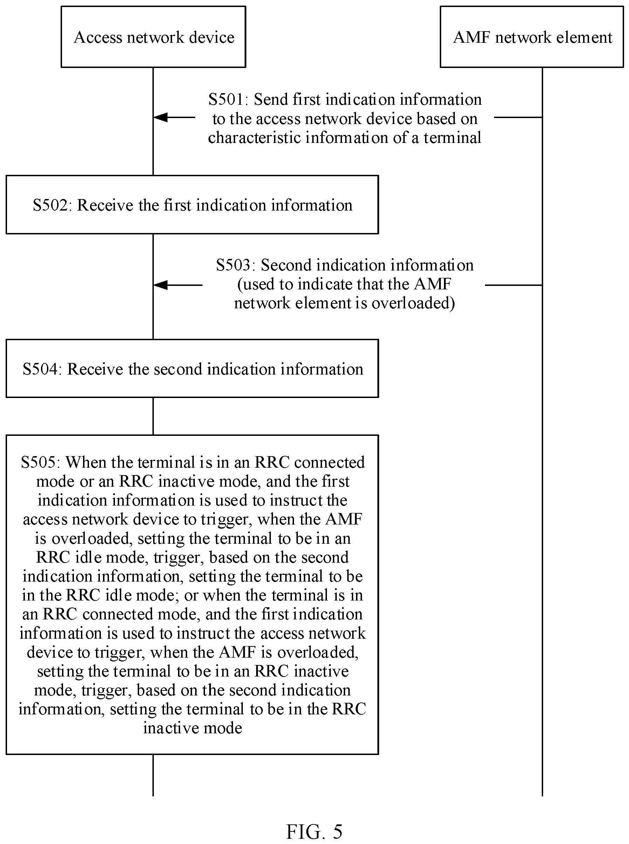

FIG. 5 is a schematic diagram of an overload control method according to an embodiment of this application. The method shown in FIG. 5 may include the following steps.

S501: An AMF network element sends first indication information to an access network device based on characteristic information of a terminal.

The first indication information is used to instruct the access network device to trigger, when the AMF network element is overloaded, setting the terminal to be in an RRC idle mode or an RRC inactive mode.

Optionally, when the characteristic information of the terminal meets a first preset condition, the first indication information is used to instruct the access network device to trigger, when the AMF network element is overloaded, setting the terminal to be in the RRC idle mode.

Optionally, when the characteristic information of the terminal meets a second preset condition, the first indication information is used to instruct the access network device to trigger, when the AMF network element is overloaded, setting the terminal to be in the RRC inactive mode.

For related content about the characteristic information of the terminal, a manner in which the AMF network element obtains the characteristic information of the terminal, whether the characteristic information of the terminal meets the first preset condition or the second preset condition, and the like, refer to the foregoing descriptions.

There may be an association relationship between the first indication information and the terminal. For example, any one or more pieces of information included in the first indication information are associated with the terminal, to implement the association relationship between the first indication information and the terminal. In this example, the first indication information may not include identification information of the terminal. For another example, the first indication information includes identification information of the terminal, to implement the association relationship between the first indication information and the terminal.

The first indication information may be a message, or may be an information element in a message. This is not limited in this embodiment of this application. In addition, a type of information included in the first indication information is not limited in this embodiment of this application. The first indication information may include a type of the terminal (for example, a first preset type or a second preset type), to instruct to trigger setting the terminal to be in the RRC idle mode or the RRC inactive mode. When the type of the terminal included in the first indication information is the first preset type, the first indication information is used to instruct the access network device to trigger, when the AMF network element is overloaded, setting the terminal to be in the RRC idle mode. Alternatively, when the type of the terminal included in the first indication information is the second preset type, the first indication information is used to instruct the access network device to trigger, when the AMF network element is overloaded, setting the terminal to be in the RRC inactive mode. For another example, the first indication information may include a binary number" 1", to instruct to trigger setting the terminal to be in the RRC idle mode, or include a binary number "0", to instruct to trigger setting the terminal to be in the RRC inactive mode. Certainly, this application is not limited thereto. In addition, a message in which the first indication information is carried for sending is not limited in this embodiment of this application.

S502: The access network device receives the first indication information from the AMF network element.

S503: The AMF network element sends second indication information to the access network device.

The second indication information is used to indicate that the AMF network element is overloaded.

Specifically, the AMF network element may send the second indication information to the access network device when determining that the AMF network element is overloaded. For example, the second indication information may be an overload start message.

S504: The access network device receives the second indication information from the AMF network element.

A sequence of steps S501 and S502 and steps S503 and S504 is not limited in this embodiment of this application. For example, S501 and S502 may be performed before S503 and S504, or S503 and S504 may be performed before S501 and S502, or S503 and S504 may be performed in a process of performing S501 and S502, or S501 and S502 may be performed in a process of performing S503 and S504.

S505: When the terminal is in an RRC connected mode or the RRC inactive mode, and the first indication information is used to instruct the access network device to trigger, when the AMF is overloaded, setting the terminal to be in the RRC idle mode, the access network device triggers, based on the second indication information (for example, after determining that the second indication information is received), setting the terminal to be in the RRC idle mode; or when the terminal is in an RRC connected mode, and the first indication information is used to instruct the access network device to trigger, when the AMF is overloaded, setting the terminal to be in the RRC inactive mode, the access network device triggers, based on the second indication information (for example, after determining that the second indication information is received), setting the terminal to be in the RRC inactive mode.

For an implementation process of triggering, by the access network device, setting the terminal to be in the RRC idle mode or the RRC inactive mode, refer to the foregoing descriptions.

In a specific implementation of the first branch in step S505, when the terminal is in the RRC connected mode or the RRC inactive mode, and the first indication information is used to instruct the access network device to trigger, when the AMF is overloaded, setting the terminal to be in the RRC idle mode, if the terminal does not have data transmission (for example, does not have data transmission within a preset time period), the access network device triggers, after determining that the second indication information is received, setting the terminal to be in the RRC idle mode.

In a specific implementation of the second branch in step S505, when the terminal is in the RRC connected mode, and the first indication information is used to instruct the access network device to trigger, when the AMF is overloaded, setting the terminal to be in the RRC inactive mode, if the terminal does not have data transmission (for example, does not have data transmission within a preset time period), the access network device triggers, after determining that the second indication information is received, setting the terminal to be in the RRC idle mode.

Alternatively, the first indication information is used to instruct the access network device to trigger, when the AMF network element is overloaded and the terminal does not have data transmission, setting the terminal to be in an RRC idle mode or an RRC inactive mode. For example, when the characteristic information of the terminal meets a first preset condition, the first indication information is used to instruct the access network device to trigger, when the AMF network element is overloaded and the terminal does not have data transmission, setting the terminal to be in the RRC idle mode. For another example, when the characteristic information of the terminal meets a second preset condition, the first indication information is used to instruct the access network device to trigger, when the AMF network element is overloaded and the terminal does not have data transmission, setting the terminal to be in the RRC inactive mode. Correspondingly, the two branches in S505 may be respectively replaced with the foregoing two implementations.

In the overload control method provided in this embodiment, the AMF network element sends the indication information to the access network device based on the characteristic information of the terminal; when determining that the AMF network element is overloaded, the access network device triggers, based on the indication information, setting the terminal to be in the RRC idle mode or the RRC inactive mode. This technical solution helps relieve overload of the AMF network element. For a specific analysis process, refer to the foregoing descriptions.

It may be understood that common points shared by the embodiments shown in FIG. 4A and FIG. 5 may include: The AMF network element indicates, to the access network device, that the AMF network element is overloaded; and the access network device triggers, based on a current RRC mode of the terminal, setting the terminal to be in a specific RRC mode. A difference between the two embodiments may include: In the embodiment shown in FIG. 4A, the access network device determines, based on the characteristic information of the terminal, to set the terminal to be in a specific RRC mode, whereas in the embodiment shown in FIG. 5, the AMF network element determines, based on the characteristic information of the terminal, to set the terminal to be in a specific RRC mode, and then indicates the determined result to the access network device. It can be learned that, compared with the embodiment shown in FIG. 5, the embodiment shown in FIG. 4A can further relieve overload of the AMF network element.

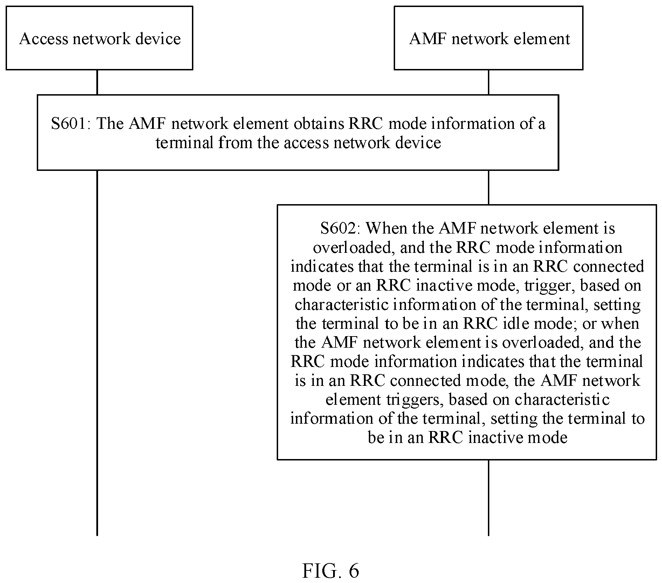

FIG. 6 is a schematic diagram of an overload control method according to an embodiment of this application. The method shown in FIG. 6 may include the following steps.

S601: An AMF network element obtains RRC mode information of a terminal from an access network device.

The RRC mode information is used to indicate an RRC mode (for example, an RRC connected mode, an RRC inactive mode, or an RRC idle mode) of the terminal.

For example, the AMF network element sends a request message to the access network device, and the request message is used to request to obtain a current RRC mode of the terminal. After receiving the request message, the access network device may return a response message to the AMF network element. The response message carries the RRC mode information of the terminal. The request message may be a terminal state transition notification request (UE state transition notification request) message, and the response message may be a terminal notification (UE notification) message. Certainly, this application is not limited thereto.

S602: When the AMF network element is overloaded, and the RRC mode information indicates that the terminal is in the RRC connected mode or the RRC inactive mode, the AMF network element triggers, based on characteristic information of the terminal, setting the terminal to be in the RRC idle mode; or when the AMF network element is overloaded, and the RRC mode information indicates that the terminal is in the RRC connected mode, the AMF network element triggers, based on characteristic information of the terminal, setting the terminal to be in the RRC inactive mode.

For setting the terminal to be in the RRC idle mode, refer to the method provided in FIG. 2. For example, the setting is implemented by performing S202 to S208. The AMF network element performs S202 to trigger setting the terminal to be in the RRC idle mode.

The AMF network element may send indication information to the access network device, to trigger setting the terminal to be in the RRC inactive mode. The indication information is used to instruct the access network device to perform S301 in FIG. 3. For setting the terminal to be in the RRC inactive mode, refer to the method provided in FIG. 3. For example, the setting is implemented by sending, by the AMF network element, the indication information to the access network device, and by performing S301 and S302.

Optionally, that the AMF network element triggers, based on characteristic information of the terminal, setting the terminal to be in the RRC idle mode includes: When the characteristic information of the terminal meets a first preset condition, the AMF network element triggers setting the terminal to be in the RRC idle mode.

Optionally, that the AMF network element triggers, based on characteristic information of the terminal, setting the terminal to be in the RRC inactive mode includes: When the characteristic information of the terminal meets a second preset condition, the AMF network element triggers setting the terminal to be in the RRC inactive mode.

For related content about the characteristic information of the terminal, a manner in which the AMF network element obtains the characteristic information of the terminal, whether the characteristic information of the terminal meets the first preset condition or the second preset condition, how the AMF network element determines that the AMF network element is overloaded, and the like, refer to the foregoing descriptions.

A sequence of obtaining, by the AMF network element, the RRC mode of the terminal, determining, by the AMF network element, whether the characteristic information of the terminal meets the first preset condition or the second preset condition, and determining, by the AMF network element, that the AMF network element is overloaded is not limited in this embodiment of this application. For example, these steps may be performed at the same time, or may be sequentially performed. For example, the AMF network element may first determine whether the characteristic information of the terminal meets the first preset condition or the second preset condition (for example, first determine, based on the characteristic information of the terminal, whether a type of the terminal is a first preset type or a second preset type), and then obtain the RRC mode of the terminal from the access network device after determining that the AMF network element is overloaded.

It should be noted that the RRC mode of the terminal may change, and therefore, the execution AMF network element may obtain a current RRC mode of the terminal for a single time or a plurality of times, for example, obtain a current RRC mode of the terminal periodically or upon triggering, so that when the AMF network element is overloaded, a latest RRC mode of the terminal obtained by the AMF network element is an actual current RRC mode of the terminal. This implements overload control of the AMF network element.

In the overload control method provided in this embodiment, the AMF network element obtains the RRC mode of the terminal from the access network device, and when the AMF network element is overloaded, the AMF network element triggers, based on the RRC mode and the characteristic information of the terminal, setting the terminal to be in the RRC idle mode or the RRC inactive mode. This technical solution helps relieve overload of the AMF network element. For a specific analysis process, refer to the foregoing descriptions.

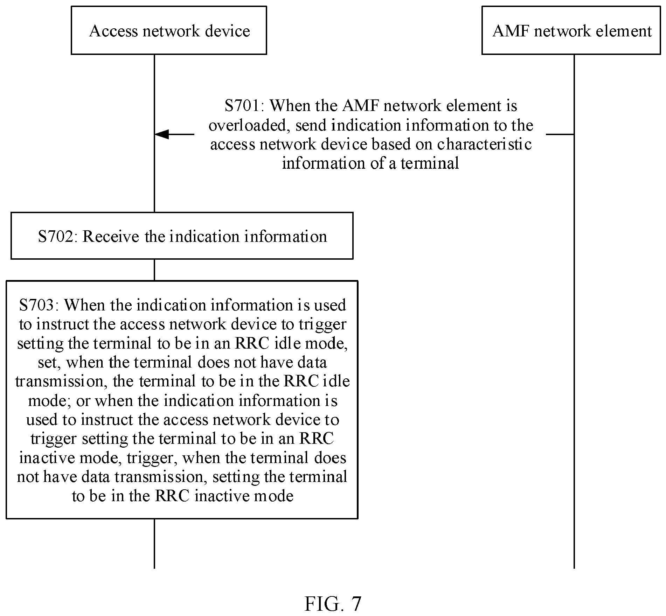

FIG. 7 is a schematic diagram of an overload control method according to an embodiment of this application. The method shown in FIG. 7 may include the following steps.

S701: When an AMF network element is overloaded, the AMF network element sends indication information to an access network device based on characteristic information of a terminal.

The indication information is used to instruct the access network device to trigger setting the terminal to be in an RRC idle mode or an RRC inactive mode. The indication information may be carried in a terminal context modification request (UE context modification request) message. Certainly, this application is not limited thereto.

For example, when the characteristic information of the terminal meets a first preset condition, the indication information is used to instruct the access network device to trigger, when the AMF network element is overloaded, setting the terminal to be in the RRC idle mode.

For example, when the characteristic information of the terminal meets a second preset condition, the indication information is used to instruct the access network device to trigger, when the AMF network element is overloaded, setting the terminal to be in the RRC inactive mode.

Alternatively, the indication information is used to instruct the access network device to trigger, when the terminal does not have data transmission, setting the terminal to be in an RRC idle mode or an RRC inactive mode.

For related content about the characteristic information of the terminal, a manner in which the AMF network element obtains the characteristic information of the terminal, whether the characteristic information of the terminal meets the first preset condition or the second preset condition, how the AMF network element determines that the AMF network element is overloaded, and the like, refer to the foregoing descriptions.

An execution sequence of determining, by the AMF network element, that the AMF network element is overloaded and determining, based on the characteristic information of the terminal, whether the indication information is specifically used to instruct the access network device to trigger setting the terminal to be in the RRC idle mode or the RRC inactive mode is not limited in this embodiment of this application. For example, the two steps may be performed at the same time, or may be sequentially performed. For example, the AMF network element may first determine, based on the characteristic information of the terminal, whether the indication information is specifically used to instruct the access network device to trigger setting the terminal to be in the RRC idle mode or the RRC inactive mode, and then send the determined indication information to the access network device when determining that the AMF network element is overloaded.

S702: The access network device receives the indication information from the AMF network element.

S703: When the indication information is used to instruct the access network device to trigger setting the terminal to be in the RRC idle mode, the access network device sets, when the terminal does not have data transmission, the terminal to be in the RRC idle mode; or when the indication information is used to instruct the access network device to trigger setting the terminal to be in the RRC inactive mode, the access network device triggers, when the terminal does not have data transmission, setting the terminal to be in the RRC inactive mode.

For an implementation process of triggering, by the access network device, setting the terminal to be in the RRC idle mode or the RRC inactive mode, refer to the foregoing descriptions.

For a meaning of "the terminal does not have data transmission", refer to the foregoing descriptions. Details are not described again.

According to the foregoing descriptions, it may be understood that, when the terminal does not send data, the terminal may be in an RRC connected mode or the RRC inactive mode.

In the overload control method provided in this embodiment, during overload control, the AMF network element sends the indication information to the access network device based on the characteristic information of the terminal; after receiving the indication information, the access network device triggers, based on the indication information, setting the terminal to be in the RRC idle mode or the RRC inactive mode. This technical solution helps relieve overload of the AMF network element. For a specific analysis process, refer to the foregoing descriptions.

It may be understood that a common point shared by the embodiments shown in FIG. 6 and FIG. 7 may include: The access network device may not learn that the AMF network element is overloaded. A difference between the two embodiments may include: In the embodiment shown in FIG. 6, the AMF network element first obtains an RRC mode of the terminal, and then determines, based on the RRC mode of the terminal and the characteristic information of the terminal, to set the terminal to be in a specific RRC mode; in the embodiment shown in FIG. 7, the AMF network element does not learn of an RRC mode of the terminal, but determines, based on the characteristic information of the terminal, to set a terminal with specific characteristic information to be in a specific RRC mode, and then indicates the determined result to the access network device, and then, the access network device determines, based on a current RRC mode of the terminal and the indication, to set the terminal to be in the specific RRC mode. It can be learned that, compared with the embodiment shown in FIG. 6, the embodiment shown in FIG. 7 can further relieve overload of the AMF network element.

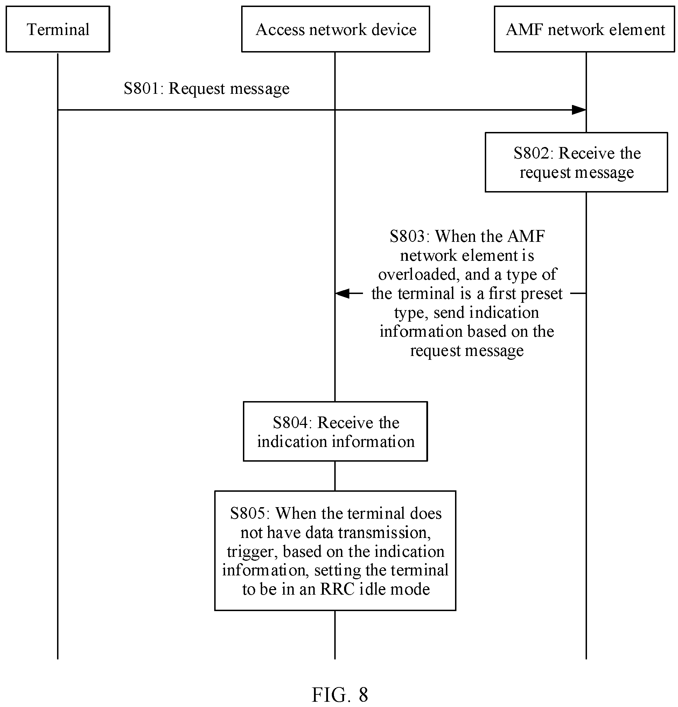

FIG. 8 is a schematic diagram of an overload control method according to an embodiment of this application. The method shown in FIG. 8 may include the following steps.

S801: A terminal sends a request message to an AMF network element.

The request message may include a registration request (registration request) message or a service request (service request) message.

For example, the terminal in an RRC idle mode sends the request message to the AMF network element. Specifically, the terminal in the RRC idle mode sends the request message to the AMF network element by using an access network device.

It may be understood that, when the terminal is in the RRC idle mode, if the terminal performs data transmission (for example, the terminal sends data to a DN, or receives data sent by a DN), the terminal sends the registration request message to the AMF network element to trigger a registration procedure, or sends the service request message to the AMF network element to trigger a service request procedure or the like, so as to set the terminal to be in an RRC connected mode. When the terminal does not have data transmission, the terminal is switched from the RRC connected mode to an RRC inactive mode or the RRC idle mode. In an example, when the terminal has a capability of being in the RRC inactive mode, the terminal is switched from the RRC connected mode to the RRC inactive mode; when the terminal does not have a capability of being in the RRC inactive mode, the terminal is switched from the RRC connected mode to the RRC idle mode.

S802: The AMF network element receives the request message from the terminal.

S803: When the AMF network element is overloaded, and a type of the terminal is a first preset type, the AMF network element sends indication information to the access network device based on the request message (for example, after receiving the request information).

The indication information is used to indicate that setting the terminal to be in the RRC inactive mode is not allowed to (or cannot) be triggered.

Alternatively, the indication information is used to instruct to trigger setting the terminal to be in the RRC idle mode.

A sequence of receiving, by the AMF network element, the request message from the terminal, determining that the AMF network element is overloaded, and determining that the type of the terminal is the first preset type is not limited in this embodiment of this application. For example, these steps may be performed at the same time, or may be sequentially performed.

S804: The access network device receives the indication information from the AMF network element.

S805: When the terminal does not have data transmission, the access network device triggers, based on the indication information, setting the terminal to be in the RRC idle mode. For an implementation process of triggering, by the access network device, setting the terminal to be in the RRC idle mode, refer to the foregoing descriptions.

When the terminal does not have data transmission, the terminal may be in the RRC connected mode or the RRC inactive mode.

Optionally, S805 includes: The access network device determines, based on the indication information, that the terminal is not allowed to enter the RRC inactive mode; and when the terminal does not have data transmission, the access network device triggers, based on the indication information, setting the terminal to be in the RRC idle mode.

Optionally, the indication information may be implemented in any one of the following manners:

Manner 1: The indication information is an N2 message, and the N2 message does not include assistance information. The assistance information is used by the access network device to trigger setting the terminal to be in the RRC inactive mode.

It may be understood that the N2 message is a message in the registration procedure and the service request procedure. If the N2 message does not include the assistance information, the access network device cannot trigger setting the terminal to be in the RRC inactive mode. In other words, in this manner, regardless of whether the terminal has the capability of being in the RRC inactive mode, when the AMF network element is overloaded, if the request procedure or the service request procedure is performed, the N2 message does not include the assistance information.

Manner 2: The indication information is carried in an N2 message.

For example, the indication information may be the type of the terminal (that is, the first preset type). In this example, S805 may include: The access network device determines, based on the type of the terminal (that is, the first preset type), that the terminal is not allowed to enter the RRC inactive mode; and when the terminal does not have data transmission, the access network device triggers setting the terminal to be in the RRC idle mode.

Optionally, the N2 message may further include (or carry) assistance information. In this way, after overload of the AMF network element is alleviated or eliminated, if the access network device determines that the terminal does not have data transmission, the access network device may trigger setting the terminal to be in the RRC inactive mode, with no need to obtain the assistance information from the AMF network element through signaling exchange. Therefore, this helps reduce signaling overheads.

In the overload control method provided in this embodiment of this application, when the AMF network element receives the registration request message or the service request message, and determines that the AMF network element is overloaded and the type of the terminal is the first preset type, the AMF network element sends the indication information to the access network device, where the indication information is used to trigger indicating that setting the terminal to be in the RRC inactive mode is not allowed to (or cannot) be triggered. This technical solution helps relieve overload of the AMF network element. For a specific analysis process, refer to the foregoing descriptions.

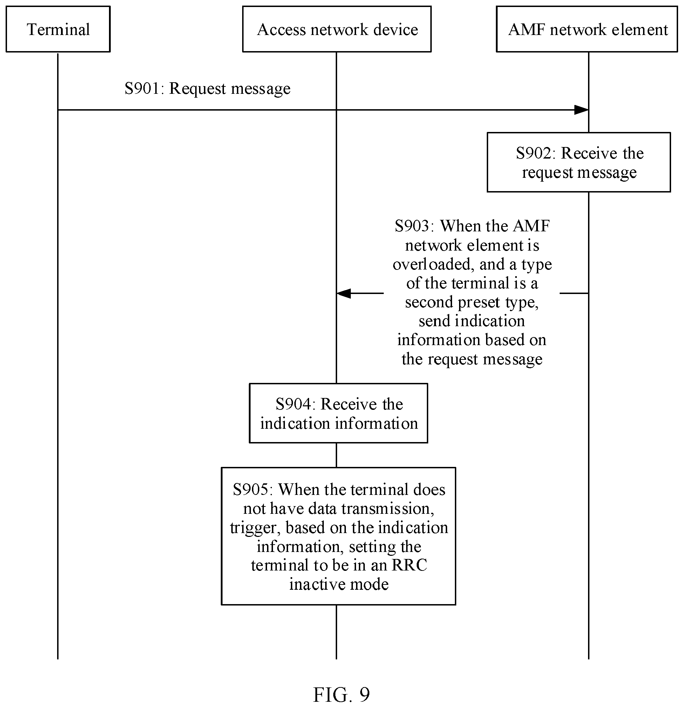

FIG. 9 is a schematic diagram of an overload control method according to an embodiment of this application. The method shown in FIG. 9 includes the following steps.

For S901 and S902, refer to S801 and S802. Certainly, this application is not limited thereto.

S903: When an AMF network element is overloaded, and a type of a terminal is a second preset type, the AMF network element sends indication information to an access network device based on a request message (for example, after receiving the request message).

The indication information is used to indicate that setting the terminal to be in an RRC inactive mode is allowed to (or can) be triggered.

A sequence of receiving, by the AMF network element, the request message from the terminal, determining that the AMF network element is overloaded, and determining that the type of the terminal is the second preset type is not limited in this embodiment of this application. For example, these steps may be performed at the same time, or may be sequentially performed.

S904: The access network device receives the indication information from the AMF network element.

S905: When the terminal does not have data transmission, the access network device triggers, based on the indication information, setting the terminal to be in the RRC inactive mode.

For example, for an implementation process of triggering, by the access network device, setting the terminal to be in the RRC inactive mode, refer to the foregoing descriptions.

Optionally, the indication information may be carried in an N2 message. For example, the indication information may be the type of the terminal (that is, the second preset type).

Optionally, S905 includes: The access network device determines, based on the indication information, that the terminal is allowed to enter the RRC inactive mode; and when the terminal does not have data transmission, the access network device triggers setting the terminal to be in the RRC inactive mode.

Optionally, the N2 message may further include (or carry) assistance information. Further, that the access network device determines, based on the indication information, that the terminal is allowed to enter the RRC inactive mode may include: The access network device determines, based on the type of the terminal (that is, the second preset type) and the assistance information, that the terminal is allowed to enter the RRC inactive mode.

In the overload control method provided in this embodiment, when the AMF network element receives a registration request message or a service request message, and determines that the AMF network element is overloaded and the type of the terminal is the second preset type, the AMF network element sends the indication information to the access network device, where the indication information is used to indicate that setting the terminal to be in the RRC inactive mode is allowed to (or can) be triggered. Therefore, this helps relieve overload of the AMF network element. It should be noted that, in the prior art, after the AMF network element sends the assistance information to the access network device, whether to trigger setting the terminal to be in the RRC inactive mode is determined by the access network device. For a specific determining manner, no specific implementation is provided in the prior art.

It may be understood that a common point shared by the embodiments shown in FIG. 8 and FIG. 9 may include: In a process of establishing a connection between the terminal and a network device (for example, the access network device), the AMF network element indicates, to the access network device based on characteristic information of the terminal, whether setting the terminal to be in the RRC inactive mode is allowed to be triggered. A difference between the two embodiments may include: In the embodiment shown in FIG. 8, when the type of the terminal is the first preset type, the AMF network element indicates, to the access network device, that setting the terminal to be in the RRC inactive mode is not allowed to be triggered, whereas in the embodiment shown in FIG. 9, when the type of the terminal is the second preset type, the AMF network element indicates, to the access network device, that setting the terminal to be in the RRC inactive mode is allowed to be triggered.

The foregoing describes the solutions provided in the embodiments of this application, mainly from a perspective of interaction between different network elements. It may be understood that, to implement the foregoing functions, the access and mobility management network element (for example, the AMF network element) and the access network device each include a corresponding hardware structure and/or software module for performing each function. With reference to the units and algorithm steps described in the embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, the access and mobility management network element, the access network device, and the like may be divided into functional units based on the foregoing method examples. For example, the functional units may be obtained through division in one-to-one correspondence with functions, or two or more functions may be integrated into one processing unit. The integrated unit may be implemented in a form of hardware, or may be implemented in a form of a software functional unit. It should be noted that, in this embodiment of this application, unit division is exemplary, and is merely a logical function division. In actual implementation, another division manner may be used.

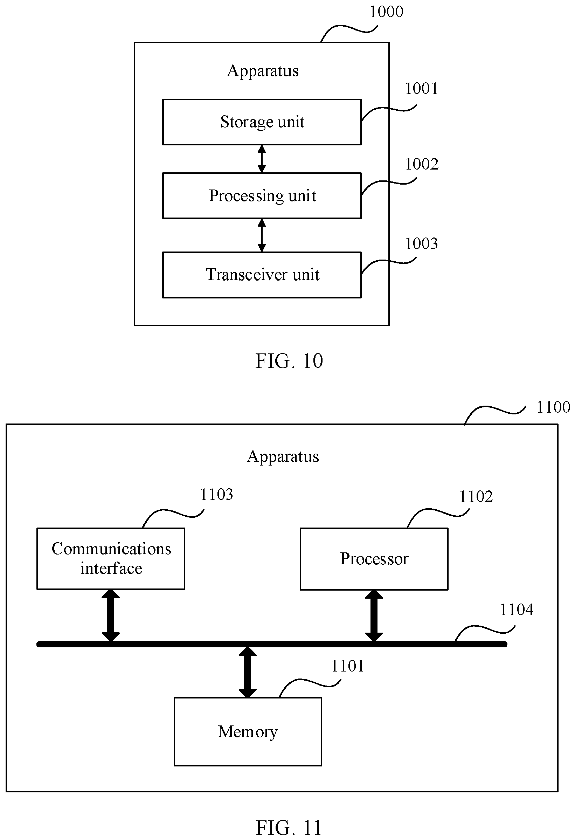

When an integrated unit is used, FIG. 10 is a possible example block diagram of an apparatus according to an embodiment of this application. The apparatus 1000 may exist in a form of software, hardware, or a combination of software and hardware. FIG. 10 is a possible schematic block diagram of the apparatus according to this embodiment of this application. The apparatus 1000 may include a processing unit 1002 and a transceiver unit 1003. Alternatively, the apparatus 1000 may include a transceiver unit 1003. The processing unit 1002 may be configured to control and manage an action of the apparatus. The transceiver unit 1003 may be configured to support communication between the apparatus and another device. Optionally, the apparatus 1000 may further include a storage unit 1001, and the storage unit 1001 may be configured to store program code and data of the apparatus 1000.

The apparatus 1000 shown in FIG. 10 may be the access and mobility management network element or the access network device in the embodiments of this application, or may be a chip or system on chip in the access and mobility management network element or the access network device.

When the apparatus 1000 shown in FIG. 10 is the access and mobility management network element (for example, the AMF network element), the processing unit 1002 can support the apparatus 1000 in performing actions performed by the AMF network element in the foregoing method embodiments. The transceiver unit 1003 can support communication between the apparatus 1000 and an access network device, a terminal, or the like.

In an implementation, the transceiver unit 1003 may be configured to send indication information to the access network device. The indication information is used to indicate that the access and mobility management network element is overloaded, and instruct to trigger setting, to be in an RRC idle mode, a terminal whose characteristic information meets a first preset condition. For example, with reference to FIG. 4B, the transceiver unit 1003 may be configured to perform a branch of S401.

In an implementation, the transceiver unit 1003 may be configured to send indication information to the access network device. The indication information is used to indicate that the access and mobility management network element is overloaded, and instruct to trigger setting, to be in an RRC inactive mode, a terminal whose characteristic information meets a second preset condition. For example, with reference to FIG. 4B, the transceiver unit 1003 may be configured to perform another branch of S401.

In an implementation, the transceiver unit 1003 may be configured to send first indication information to the access network device based on characteristic information of the terminal. The first indication information may be used to instruct the access network device to trigger, when the access and mobility management network element is overloaded, setting the terminal to be in an RRC idle mode or an RRC inactive mode. For example, with reference to FIG. 5, the transceiver unit 1003 may be configured to perform S501. Optionally, when the characteristic information of the terminal meets a first preset condition, the first indication information may be used to instruct the access network device to trigger, when the access and mobility management network element is overloaded, setting the terminal to be in the RRC idle mode. Optionally, when the characteristic information of the terminal meets a second preset condition, the first indication information may be used to instruct the access network device to trigger, when the access and mobility management network element is overloaded, setting the terminal to be in the RRC inactive mode.

In an implementation, the transceiver unit 1003 may be configured to obtain RRC mode information of the terminal from the access network device. The processing unit 1002 may be configured to: when the access and mobility management network element is overloaded, and the RRC mode information indicates that the terminal is in an RRC connected mode or an RRC inactive mode, trigger, based on characteristic information of the terminal, setting the terminal to be in an RRC idle mode; or when the access and mobility management network element is overloaded, and the RRC mode information indicates that the terminal is in an RRC connected mode, trigger, based on characteristic information of the terminal, setting the terminal to be in an RRC inactive mode. For example, with reference to FIG. 6, the transceiver unit 1003 may be configured to perform S601, and the processing unit 1002 may be configured to perform S602. Optionally, the processing unit 1002 may be specifically configured to: when the characteristic information of the terminal meets a first preset condition, trigger setting the terminal to be in the RRC idle mode. Optionally, the processing unit 1002 may be specifically configured to: when the characteristic information of the terminal meets a second preset condition, trigger setting the terminal to be in the RRC inactive mode.

In an implementation, the transceiver unit 1003 may be configured to send indication information to the access network device based on characteristic information of the terminal when the access and mobility management network element is overloaded. The indication information may be used to instruct the access network device to trigger setting the terminal to be in an RRC idle mode or an RRC inactive mode. For example, with reference to FIG. 7, the transceiver unit 1003 may be configured to perform S701. Optionally, when the characteristic information of the terminal meets a first preset condition, the indication information may be used to instruct the access network device to trigger, when the access and mobility management network element is overloaded, setting the terminal to be in the RRC idle mode. Optionally, when the characteristic information of the terminal meets a second preset condition, the indication information may be used to instruct the access network device to trigger, when the access and mobility management network element is overloaded, setting the terminal to be in the RRC inactive mode.

In an implementation, the transceiver unit 1003 may be configured to: receive a request message from the terminal, where the request message includes a registration request message or a service request message; and when the access and mobility management network element is overloaded and a type of the terminal is a first preset type, send first indication information to the access network device based on the request message, where the first indication information may be used to indicate that setting the terminal to be in an RRC inactive mode is not allowed to be triggered. For example, with reference to FIG. 8, the transceiver unit 1003 may be configured to perform S802 and S803. Optionally, the transceiver unit 1003 may be further configured to: when the access and mobility management network element is overloaded and a type of the terminal is a second preset type, send second indication information to the access network device based on the request message, where the second indication information may be used to indicate that setting the terminal to be in an RRC idle mode is allowed to be triggered. For example, with reference to FIG. 9, the transceiver unit 1003 may be configured to perform S902 and S903.

When the apparatus 1000 shown in FIG. 10 is the access network device, the processing unit 1002 can support the apparatus 1000 in performing actions completed by the access network device in the foregoing method embodiments. The transceiver unit 1003 can support communication between the apparatus 1000 and an access and mobility management network element, a terminal, or the like.

In an implementation, the transceiver unit 1003 may be configured to receive indication information from the access and mobility management network element. The indication information may be used to indicate that the access and mobility management network element is overloaded. The processing unit 1002 may be configured to: when a first terminal is in an RRC connected mode or an RRC inactive mode, trigger, based on the indication information and characteristic information of the first terminal, setting the first terminal to be in an RRC idle mode; or when a first terminal is in an RRC connected mode, trigger, based on the indication information and characteristic information of the first terminal, setting the first terminal to be in an RRC inactive mode. For example, with reference to FIG. 4A, the transceiver unit 1003 may be configured to perform S402A, and the processing unit 1002 may be configured to perform S403A.

Based on this implementation, optionally, the processing unit 1002 may be specifically configured to: when the characteristic information of the first terminal meets a first preset condition, trigger, based on the indication information, setting the first terminal to be in the RRC idle mode. Further optionally, the indication information is further used to instruct to trigger setting, to be in the RRC idle mode, a terminal whose characteristic information meets the first preset condition. In this case, the processing unit 1002 may be further configured to determine, based on the indication information, the terminal whose characteristic information meets the first preset condition. The terminal whose characteristic information meets the first preset condition includes the first terminal. For example, with reference to FIG. 4B, the processing unit 1002 may be configured to perform the step in the case 1 in S403B.

Based on this implementation, optionally, the processing unit 1002 may be specifically configured to: when the characteristic information of the first terminal meets a second preset condition, trigger, based on the indication information, setting the first terminal to be in the RRC inactive mode. Further optionally, the indication information is further used to instruct to trigger setting, to be in the RRC inactive mode, a terminal whose characteristic information meets the second preset condition. In this case, the processing unit 1002 may be further configured to determine, based on the indication information, the terminal whose characteristic information meets the second preset condition. The terminal whose characteristic information meets the second preset condition includes the first terminal. For example, with reference to FIG. 4B, the processing unit 1002 may be configured to perform the step in the case 2 in S403B.

In an implementation, the transceiver unit 1003 may be configured to receive first indication information from the access and mobility management network element, and receive second indication information from the access and mobility management network element. The second indication information may be used to indicate that the access and mobility management network element is overloaded. The processing unit 1002 may be configured to: when the terminal is in an RRC connected mode or an RRC inactive mode, and the first indication information may be used to instruct the access network device to trigger, when the access and mobility management network element is overloaded, setting the terminal to be in an RRC idle mode, trigger, based on the second indication information, setting the terminal to be in the RRC idle mode; or when the terminal is in an RRC connected mode, and the first indication information may be used to instruct the access network device to trigger, when the access and mobility management network element is overloaded, setting the terminal to be in an RRC inactive mode, trigger, based on the second indication information, setting the terminal to be in the RRC inactive mode. For example, with reference to FIG. 5, the transceiver unit 1003 may be configured to perform S502 and S504, and the processing unit 1002 may be configured to perform S505.

In an implementation, the transceiver unit 1003 may be configured to receive indication information sent by the access and mobility management network element. The processing unit 1002 may be configured to: when the indication information may be used to instruct to trigger setting the terminal to be in an RRC idle mode, when the terminal does not have data transmission, trigger setting the terminal to be in the RRC idle mode; or when the indication information may be used to instruct to trigger setting the terminal to be in an RRC inactive mode, when the terminal does not have data transmission, trigger setting the terminal to be in the RRC inactive mode. For example, with reference to FIG. 7, the transceiver unit 1003 may be configured to perform S702, and the processing unit 1002 may be configured to perform S703.

In an implementation, the transceiver unit 1003 may be configured to receive first indication information sent by the access and mobility management network element. The first indication information may be used to indicate that the terminal is not allowed to enter an RRC inactive mode. The processing unit 1002 may be configured to: when the terminal does not have data transmission, trigger, based on the first indication information, setting the terminal to be in an RRC idle mode. For example, with reference to FIG. 8, the transceiver unit 1003 may be configured to perform S804, the processing unit may be configured to perform S805, and the first indication information may be specifically the indication information in FIG. 8. Optionally, the first indication information is carried in a first N2 message, and the first indication information is a type of the terminal. The processing unit 1002 is specifically configured to: determine, based on the type of the terminal, that the terminal is not allowed to enter the RRC inactive mode; and when the terminal does not have data transmission, trigger setting the terminal to be in the RRC idle mode. Optionally, the transceiver unit 1003 may be alternatively configured to receive second indication information sent by the access and mobility management network element. The second indication information may be used to indicate that the terminal is allowed to enter an RRC inactive mode. The processing unit 1002 may be alternatively configured to: when the terminal does not have data transmission, trigger, based on the second indication information, setting the terminal to be in the RRC inactive mode. For example, with reference to FIG. 9, the transceiver unit 1003 may be configured to perform S904, the processing unit may be configured to perform S905, and the second indication information may be specifically the indication information in FIG. 9. Optionally, the second indication information is carried in a second N2 message, the second N2 message further includes assistance information, and the second indication information is a type of the terminal. The assistance information may be used by the access network device to trigger setting the terminal to be in the RRC inactive mode. The processing unit 1002 may be specifically configured to: determine, based on the type of the terminal and the assistance information, that the terminal is allowed to enter the RRC inactive mode; and when the terminal does not have data transmission, trigger setting the terminal to be in the RRC inactive mode.

For example, the processing unit 1002 may be a processor or a controller, such as a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logical device, a transistor logical device, a hardware component, or any combination thereof. The processor/controller may implement or execute various example logical blocks, modules, and circuits described with reference to content disclosed in this application. The processor may be a combination of processors implementing a computing function, for example, a combination of one or more microprocessors, or a combination of the DSP and a microprocessor. The transceiver unit 1003 may be a communications interface, and the communications interface is a general term. In specific implementation, the communications interface may include one or more interfaces. The storage unit 1001 may be a memory.

When the processing unit 1002 is a processor, the transceiver unit 1003 is a communications interface, and the storage unit 1001 is a memory, the apparatus 1000 in this embodiment of this application may be an apparatus 1100 shown in FIG. 11.

Referring to FIG. 11, the apparatus 1100 includes a processor 1102 and a communications interface 1103. Further, the apparatus 1100 may further include a memory 1101. Optionally, the apparatus 1100 may further include a bus 1104. The communications interface 1103, the processor 1102, and the memory 1101 may be connected to each other by using the bus 1104. The bus 1104 may be a peripheral component interconnect (peripheral component interconnect, PCI for short) bus, an extended industry standard architecture (extended industry standard architecture, EISA) bus, or the like. The bus 1104 may be classified into an address bus, a data bus, a control bus, and the like. For ease of representation, only one thick line is used to represent the bus in FIG. 11, but this does not mean that there is only one bus or only one type of bus. The processor 1102 may perform various functions of the apparatus 1100 by running or executing a program stored in the memory 1101.

For example, the apparatus 1100 shown in FIG. 11 may be the AMF network element or the access network device in the embodiments of this application.

When the apparatus 1100 is an access and mobility management network element, the processor 1102 may perform, by running or executing the program stored in the memory 1101, actions completed by the AMF network element in the foregoing method embodiments.

When the apparatus 1100 is a session management network element, the processor 1102 may perform, by running or executing the program stored in the memory 1101, actions completed by the access network device in the foregoing method embodiments.

An embodiment of this application further provides an overload control system. The overload control system may include an access and mobility management network element and an access network device.

In an implementation, the access and mobility management network element may be configured to perform steps performed by the AMF network element in FIG. 4A, and/or another step described in the embodiments of this application. The access network device may be configured to perform steps performed by the access network device in FIG. 4A, and/or another step described in the embodiments of this application.

In an implementation, the access and mobility management network element may be configured to perform steps performed by the AMF network element in FIG. 4B, and/or another step described in the embodiments of this application. The access network device may be configured to perform steps performed by the access network device in FIG. 4B, and/or another step described in the embodiments of this application.

In an implementation, the access and mobility management network element may be configured to perform steps performed by the AMF network element in FIG. 4C, and/or another step described in the embodiments of this application. The access network device may be configured to perform steps performed by the access network device in FIG. 4C, and/or another step described in the embodiments of this application.

In an implementation, the access and mobility management network element may be configured to perform steps performed by the AMF network element in FIG. 5, and/or another step described in the embodiments of this application. The access network device may be configured to perform steps performed by the access network device in FIG. 5, and/or another step described in the embodiments of this application.

In an implementation, the access and mobility management network element may be configured to perform steps performed by the AMF network element in FIG. 6, and/or another step described in the embodiments of this application. The access network device may be configured to perform steps performed by the access network device in FIG. 6, and/or another step described in the embodiments of this application.

In an implementation, the access and mobility management network element may be configured to perform steps performed by the AMF network element in FIG. 7, and/or another step described in the embodiments of this application. The access network device may be configured to perform steps performed by the access network device in FIG. 7, and/or another step described in the embodiments of this application.

Optionally, the overload control system may further include a terminal.

In an implementation, the access and mobility management network element may be configured to perform steps performed by the AMF network element in FIG. 8, and/or another step described in the embodiments of this application. The access network device may be configured to perform steps performed by the access network device in FIG. 8, and/or another step described in the embodiments of this application. The terminal may be configured to perform steps performed by the terminal in FIG. 8, and/or another step described in the embodiments of this application.

In an implementation, the access and mobility management network element may be configured to perform steps performed by the AMF network element in FIG. 9, and/or another step described in the embodiments of this application. The access network device may be configured to perform steps performed by the access network device in FIG. 9, and/or another step described in the embodiments of this application. The terminal may be configured to perform steps performed by the terminal in FIG. 9, and/or another step described in the embodiments of this application.

For explanations of related content, beneficial effects, and the like in each example of any overload control system provided above, refer to the foregoing corresponding method. Details are not described herein again.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read only memory (erasable programmable ROM, EPROM), an electrically erasable programmable read only memory (electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in the access and mobility management network element or the access network device. Certainly, the processor and the storage medium may alternatively exist as discrete components in the access and mobility management network element or the access network device.

For explanations of related content, beneficial effects, and the like of the apparatus 1000 and the apparatus 1100 described in the embodiments of this application, refer to the foregoing method embodiments. Details are not described herein again.

A person skilled in the art should be aware that in the foregoing one or more examples, functions described in the embodiments of this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

In the foregoing specific implementations, the objectives, technical solutions, and benefits of the embodiments of this application are further described in detail. It should be understood that the foregoing descriptions are merely specific implementations of the embodiments of this application, but are not intended to limit the protection scope of the embodiments of this application. Any modification, equivalent replacement, or improvement made based on technical solutions of the embodiments of this application shall fall within the protection scope of the embodiments of this application.

## Claims

1. An overload control method, comprising:
receiving, by an access network device, indication information from an access and mobility management network element, wherein the indication information is used to indicate that the access and mobility management network element is overloaded; and
when a first terminal is in a radio resource control RRC connected mode or an RRC inactive mode, triggering, by the access network device based on the indication information and characteristic information of the first terminal, setting the first terminal to be in an RRC idle mode; or
when a first terminal is in an RRC connected mode, triggering, by the access network device based on the indication information and characteristic information of the first terminal, setting the first terminal to be in an RRC inactive mode.

2. The overload control method according to claim 1, wherein the characteristic information of the first terminal comprises at least one of the following: a moving rate of the first terminal, frequency with which the first terminal receives/sends data, frequency with which the first terminal switches between the RRC connected mode and the RRC inactive mode, frequency with which the first terminal is handed over between cells, frequency with which the first terminal initiates a radio access network notification area RNA update, a moving track of the first terminal, or a moving range of the first terminal.

3. The overload control method according to claim 1 or 2, wherein the triggering, by the access network device based on the indication information and characteristic information of the first terminal, setting the first terminal to be in an RRC idle mode comprises:
when the characteristic information of the first terminal meets a first preset condition, triggering, by the access network device based on the indication information, setting the first terminal to be in the RRC idle mode, wherein that the characteristic information of the first terminal meets the first preset condition comprises at least one of the following:
the moving rate of the first terminal is greater than or equal to a first preset threshold;
the frequency with which the first terminal receives/sends data is less than or equal to a second preset threshold;
the frequency with which the first terminal switches between the RRC connected mode and the RRC inactive mode is less than or equal to a third preset threshold;
the frequency with which the first terminal is handed over between cells is greater than or equal to a fourth preset threshold;
the frequency with which the first terminal initiates an RNA update is greater than or equal to a fifth preset threshold;
the moving track of the first terminal is not a preset moving track; or
the moving range of the first terminal is greater than or equal to a preset range.

4. The overload control method according to any one of claims 1 to 3, wherein the indication information is further used to instruct to trigger setting, to be in the RRC idle mode, a terminal whose characteristic information meets the first preset condition.

5. The overload control method according to claim 1 or 2, wherein the triggering, by the access network device based on the indication information and characteristic information of the first terminal, setting the first terminal to be in an RRC inactive mode comprises:
when the characteristic information of the first terminal meets a second preset condition, triggering, by the access network device based on the indication information, setting the first terminal to be in the RRC inactive mode, wherein that the characteristic information of the first terminal meets the second preset condition comprises at least one of the following:
the moving rate of the first terminal is less than a first preset threshold;
the frequency with which the first terminal receives/sends data is greater than a second preset threshold;
the frequency with which the first terminal switches between the RRC connected mode and the RRC inactive mode is greater than a third preset threshold;
the frequency with which the first terminal is handed over between cells is less than a fourth preset threshold;
the frequency with which the first terminal initiates an RNA update is less than a fifth preset threshold;
the moving track of the first terminal is a preset moving track; or
the moving range of the first terminal is less than a preset range.

6. The overload control method according to claim 1, 2, or 5, wherein the indication information is further used to instruct to trigger setting, to be in the RRC inactive mode, a terminal whose characteristic information meets the second preset condition.

7. An overload control method, comprising:
sending, by an access and mobility management network element, indication information to an access network device, wherein the indication information is used to indicate that the access and mobility management network element is overloaded, and the indication information is further used to instruct the access network device to trigger setting, to be in a radio resource control RRC idle mode, a terminal whose characteristic information meets a first preset condition, wherein
that characteristic information meets the first preset condition comprises at least one of the following:
a moving rate of the terminal is greater than or equal to a first preset threshold;
frequency with which the terminal receives/sends data is less than or equal to a second preset threshold;
frequency with which the terminal switches between an RRC connected mode and an RRC inactive mode is less than or equal to a third preset threshold;
frequency with which the terminal is handed over between cells is greater than or equal to a fourth preset threshold;
frequency with which the terminal initiates an RNA update is greater than or equal to a fifth preset threshold;
a moving track of the terminal is not a preset moving track; or
a moving range of the terminal is greater than or equal to a preset range.

8. An overload control method, comprising:
sending, by an access and mobility management network element, indication information to an access network device, wherein the indication information is used to indicate that the access and mobility management network element is overloaded, and the indication information is further used to instruct the access network device to trigger setting, to be in a radio resource control RRC inactive mode, a terminal whose characteristic information meets a second preset condition, wherein
that characteristic information meets the second preset condition comprises at least one of the following:
a moving rate of the terminal is less than a first preset threshold;
frequency with which the terminal receives/sends data is greater than a second preset threshold;
frequency with which the terminal switches between an RRC connected mode and the RRC inactive mode is greater than a third preset threshold;
frequency with which the terminal is handed over between cells is less than a fourth preset threshold;
frequency with which the terminal initiates an RNA update is less than a fifth preset threshold;
a moving track of the terminal is a preset moving track; or
a moving range of the terminal is less than a preset range.

9. An overload control method, comprising:
when an access and mobility management network element is overloaded, sending, by the access and mobility management network element, indication information to an access network device based on characteristic information of a terminal, wherein the indication information is used to instruct the access network device to trigger setting the terminal to be in a radio resource control RRC idle mode or an RRC inactive mode.

10. The overload control method according to claim 9, wherein the characteristic information of the terminal comprises at least one of the following: a moving rate of the terminal, frequency with which the terminal receives/sends data, frequency with which the terminal switches between an RRC connected mode and the RRC inactive mode, frequency with which the terminal is handed over between cells, frequency with which the terminal initiates a radio access network notification area RNA update, a moving track of the terminal, or a moving range of the terminal.

11. An access network device, comprising:
a transceiver unit, configured to receive indication information from an access and mobility management network element, wherein the indication information is used to indicate that the access and mobility management network element is overloaded; and
a processing unit, configured to: when a first terminal is in a radio resource control RRC connected mode or an RRC inactive mode, trigger, based on the indication information and characteristic information of the first terminal, setting the first terminal to be in an RRC idle mode; or
when a first terminal is in an RRC connected mode, trigger, based on the indication information and characteristic information of the first terminal, setting the first terminal to be in an RRC inactive mode.

12. The access network device according to claim 11, wherein the characteristic information of the first terminal comprises at least one of the following: a moving rate of the first terminal, frequency with which the first terminal receives/sends data, frequency with which the first terminal switches between the RRC connected mode and the RRC inactive mode, frequency with which the first terminal is handed over between cells, frequency with which the first terminal initiates a radio access network notification area RNA update, a moving track of the first terminal, or a moving range of the first terminal.

13. The access network device according to claim 11 or 12, wherein
the processing unit is specifically configured to: when the characteristic information of the first terminal meets a first preset condition, trigger, based on the indication information, setting the first terminal to be in the RRC idle mode, wherein that the characteristic information of the first terminal meets the first preset condition comprises at least one of the following:
the moving rate of the first terminal is greater than or equal to a first preset threshold;
the frequency with which the first terminal receives/sends data is less than or equal to a second preset threshold;
the frequency with which the first terminal switches between the RRC connected mode and the RRC inactive mode is less than or equal to a third preset threshold;
the frequency with which the first terminal is handed over between cells is greater than or equal to a fourth preset threshold;
the frequency with which the first terminal initiates an RNA update is greater than or equal to a fifth preset threshold;
the moving track of the first terminal is not a preset moving track; or
the moving range of the first terminal is greater than or equal to a preset range.

14. The access network device according to any one of claims 11 to 13, wherein the indication information is further used to instruct to trigger setting, to be in the RRC idle mode, a terminal whose characteristic information meets the first preset condition.

15. The access network device according to claim 11 or 12, wherein
the processing unit is specifically configured to: when the characteristic information of the first terminal meets a second preset condition, trigger, based on the indication information, setting the first terminal to be in the RRC inactive mode, wherein that the characteristic information of the first terminal meets the second preset condition comprises at least one of the following:
the moving rate of the first terminal is less than a first preset threshold;
the frequency with which the first terminal receives/sends data is greater than a second preset threshold;
the frequency with which the first terminal switches between the RRC connected mode and the RRC inactive mode is greater than a third preset threshold;
the frequency with which the first terminal is handed over between cells is less than a fourth preset threshold;
the frequency with which the first terminal initiates an RNA update is less than a fifth preset threshold;
the moving track of the first terminal is a preset moving track; or
the moving range of the first terminal is less than a preset range.

16. The access network device according to claim 11, 12, or 15, wherein the indication information is further used to instruct to trigger setting, to be in the RRC inactive mode, a terminal whose characteristic information meets the second preset condition.

17. An access and mobility management network element, comprising:
a transceiver unit, configured to send indication information to an access network device, wherein the indication information is used to indicate that the access and mobility management network element is overloaded, and the indication information is further used to instruct the access network device to trigger setting, to be in a radio resource control RRC idle mode, a terminal whose characteristic information meets a first preset condition, wherein that characteristic information meets the first preset condition comprises at least one of the following:
a moving rate of the terminal is greater than or equal to a first preset threshold;
frequency with which the terminal receives/sends data is less than or equal to a second preset threshold;
frequency with which the terminal switches between an RRC connected mode and an RRC inactive mode is less than or equal to a third preset threshold;
frequency with which the terminal is handed over between cells is greater than or equal to a fourth preset threshold;
frequency with which the terminal initiates an RNA update is greater than or equal to a fifth preset threshold;
a moving track of the terminal is not a preset moving track; or
a moving range of the terminal is greater than or equal to a preset range.

18. An access and mobility management network element, comprising:
a transceiver unit, configured to send indication information to an access network device, wherein the indication information is used to indicate that the access and mobility management network element is overloaded, and the indication information is further used to instruct the access network device to trigger setting, to be in a radio resource control RRC inactive mode, a terminal whose characteristic information meets a second preset condition, wherein that characteristic information meets the second preset condition comprises at least one of the following:
a moving rate of the terminal is less than a first preset threshold;
frequency with which the terminal receives/sends data is greater than a second preset threshold;
frequency with which the terminal switches between an RRC connected mode and the RRC inactive mode is greater than a third preset threshold;
frequency with which the terminal is handed over between cells is less than a fourth preset threshold;
frequency with which the terminal initiates an RNA update is less than a fifth preset threshold;
a moving track of the terminal is a preset moving track; or
a moving range of the terminal is less than a preset range.

19. An access and mobility management network element, comprising:
a transceiver unit, configured to: when the access and mobility management network element is overloaded, send indication information to an access network device based on characteristic information of a terminal, wherein the indication information is used to instruct the access network device to trigger setting the terminal to be in a radio resource control RRC idle mode or an RRC inactive mode.

20. The access and mobility management network element according to claim 19, wherein the characteristic information of the terminal comprises at least one of the following: a moving rate of the terminal, frequency with which the terminal receives/sends data, frequency with which the terminal switches between an RRC connected mode and the RRC inactive mode, frequency with which the terminal is handed over between cells, frequency with which the terminal initiates a radio access network notification area RNA update, a moving track of the terminal, or a moving range of the terminal.

21. A computer readable storage medium, comprising a computer instruction, wherein when the computer instruction is run on a computer, the overload control method according to any one of claims 1 to 10 is enabled to be performed.

22. An overload control apparatus, comprising a memory and a processor, wherein the memory is configured to store program code, and when the program code is executed by the processor, the overload control method according to any one of claims 1 to 10 is enabled to be performed.

23. A computer program product, wherein when the computer program product is run on a computer, the computer is enabled to perform the overload control method according to any one of claims 1 to 10.
